# EUROPEAN PATENT APPLICATION

(11) **EP 4 480 291 A1**
(43) Date of publication of application: **25.12.2024**
(21) Application number: 24183292.2
(22) Date of filing: 20.06.2024
(51) Int. Cl.: A01B 59/06, A01D 34/04, B60D 1/62, A01D 34/66, B60D 1/00

(54) **MODULAR HITCH AND ELECTRICALLY-POWERED IMPLEMENTS FOR POWERSPORTS VEHICLES**

(30) Priority: 22.06.2023 US 202363522611 P; 29.12.2023 US 202363615913 P
(71) Applicant: Polaris Industries Inc., Medina, MN 55340-9770 (US)
(72) Inventor: Roltgen, Alexander Stephen, Wyoming MN 55092 (US); Ebertowski, Alexander Thomas, Wyoming MN 55092 (US); Bartz, Austin Richard, Wyoming MN 55092 (US); Fuchs, Michael Jon, Wyoming MN 55092 (US); Feeney, David Thomas, Wyoming MN 55092 (US); Sherrett, Jason, Wyoming MN 55092 (US); Liu, Chiao George, Wyoming MN 55092 (US)
(74) Representative: Gleim Petri Patent- und Rechtsanwaltspartnerschaft mbB

(57) **Abstract**

An implement system for powersport vehicles (100) have implements (124) attachable to the powersport vehicles (100). The implements (124) have a modular electric motor unit that may be toollessly attached to the implement providing operational power to the implement (124). A mower implement has a mower deck and a suspension assembly that provides a forward rearward pivot axis and a left right pivot axis when hitched to the powersport vehicle. A receiving region for the electric motor unit is positioned in the suspension assembly. The mower deck may be rotated about the left right pivot axis to an upright position and latched at the position. The single motor in the receiving region connecting to three mower blade pulleys for rotating three mower blades by the one electric motor unit utilizing a pulley system.

## Description

### CROSS REFERENCE TO RELATED APPLICATIONS

This application claims the benefit of U.S. Provisional Patent Application No. 63/522,611, filed June 22, 2023, entitled MODULAR HITCH AND IMPLEMENT FOR POWERSPORTS VEHICLE, and U.S. Provisional Patent Application No. 63/615,913, filed December 29, 2023, entitled ELECTRICALLY-POWERED IMPLEMENTS FOR POWERSPORTS VEHICLE, the contents of which are expressly incorporated herein by reference.

### BACKGROUND

This disclosure relates generally to modular hitches and implements for powersports vehicles. More specifically this disclosure relates to modular hitches and powered implements with motors mounted on the implements.

### SUMMARY

Embodiments of the present disclosure address many of the shortcomings of known hitch and implement systems by providing convenient, modular hitch and implement devices and systems for powersports vehicles. Embodiments of hitches of the present disclosure are self-centering, and may be easily and detachably coupled to a rear or front of the vehicle without the use of tools. The hitch is also easily and detachably connected to various implements, such as snow blowers, plows, rotary brooms, and so on. Actuators may be mounted on the hitch itself for precisely positioning the hitch and implement as controlled by a user inside or outside the powersports vehicle. In some embodiments, the actuators may be electrically powered, such as by a battery, which may be a traction battery in the case of a battery-powered electric vehicle. Implements connectable to the hitch may include an actuator and in some cases, an electric motor, for implement operation.

In one particular embodiment, a modular hitch device includes: a hitch frame; a hitch-vehicle coupling portion connected to the hitch frame and configured to detachably connect the modular hitch device to the powersports vehicle; a hitch-implement coupling portion connected to the hitch frame and configured to detachably connect the modular hitch device to an implement; an electrical interface configured to electrically connect the modular hitch device to a power source; and an electrical actuator mounted to the hitch frame and in electrical connection with the electrical interface, the electrical actuator configured to convert electrical power received from the power source to mechanical movement of the modular hitch device.

In another embodiment, a system for connecting and powering a powersports vehicle implement, includes a modular hitch of the previous embodiment, as well as an implement device that is connectable to the modular hitch device. The implement device may include a mechanical interface configured to connect to the hitch-implement coupling portion of the modular hitch device; and an electromechanical device, such as an actuator or motor, for performing an operation of the implement device.

The disclosure also includes methods of distributing power to a hitch and/or implement that is connected to the hitch, from a powersports vehicle that may be an internal-combustion-engine (ICE) powersports vehicle, or a battery electric vehicle (EV).

Other methods are directed to communicating with and controlling the hitch and implement using one or more of vehicle controllers, an implement controller or even a remote-control device.

Further, attaching and detaching implements, which are typically relatively large and heavy, such as mower implements can be inconvenient and difficult. Moreover, the most expensive component, and generally the heaviest component with respect to powered implements is generally the motor, whether it is gasoline power, or electric powered.

In embodiments, a powered implement attachable to powersports vehicles has a single modular electric motor unit that may be readily attached to and removed from the implement, for use, for example on other powered implements, or to take the modular electric motor unit out of the weather. In embodiments the modular electric motor may be removed and installed on the implements without tools. The implement may be, for example, a mower implement forwardly mounted on a powersports vehicle, utilizing the single modular electric motor unit to drive a plurality of mower blades. The mower implement further has a suspension system that supports a mower deck, connects to or is integrated with the mower deck, provides two degrees of freedom of the mower implement with respect to the vehicle, and that accommodates within the vertical projection of the suspension system a left to right centrally positioned implement motor, the motor unit within the suspension system on the mower deck. The suspension system providing forward rearward and side to side pivot axes that facilitates the mower deck following the terrain being mowed, and also provides a flip-up feature of the mower deck, providing easy cleaning and maintenance of the mower deck and a dramatically reduced foot print for parking and/or storing the powersports vehicle with the mower deck attached.

In embodiments, an implement connecting to a powersports vehicle, is raisable and lowerable by powered hitch device mounted on the powersports vehicle, the implement powered by a single motor.

The powersports vehicle that may be an internal-combustion-engine (ICE) powersports vehicle, or a battery electric vehicle (EV), or may be a hybrid vehicle.

In embodiments, a powersport vehicle has a modular electric motor unit, an electric motor mounted to an adapter, the unit having an output shaft with a coupling end, the adaptor having an annular shape with an annular flange portion secured to the electric motor, a plurality of circumferentially extending interface portions at a periphery of the adaptor, and a pair manual operated biased latch pins supported by the adaptor and each having an extended position and a retracted position, a mower implement has a mower deck, a suspension assembly mounted to and extending upwardly from the mower deck; and an implement hitch coupling portion at a rearward end of the suspension assembly, the implement hitch coupling portion configured to connect a hitch device on the powersport vehicle; the mower deck comprises a deck housing with a upper plate portion and a downwardly extending skirt portion at an outer periphery of the mower deck housing, the mower deck housing defining a cutting region, the mower deck further comprising a plurality of wheels positioned about the periphery of the mower deck housing, the mower deck having a single receiving region for receiving the modular electric motor unit from the mower deck, the mower deck having at the receiving region a plurality of capture portions for capturing the plurality of interface portions of the adaptor and further having at the receiving region a pair of apertures for receiving the pair of latch pins, the mower deck having a cooperating coupling centrally located in the receiving region for receiving and connecting with the coupling end of the modular electric motor unit.

In embodiments, a powered mower implement for a powersport vehicle has a mower deck with a motor mounted or mountable thereon, on the top side of the mower deck, a suspension assembly mounted to and extending upwardly from the mower deck, an implement hitch coupling portion at a rearward end of the suspension assembly, the implement hitch coupling portion connectable to a hitch device on the powersport vehicle, the mower deck comprises a deck housing with a upper plate portion and a downwardly extending skirt portion at an outer periphery of the mower deck housing, the mower deck housing defining a cutting region below the upper plate portion, the mower deck further having a plurality of wheels positioned about the periphery of the mower deck housing, the suspension system provides a forward rearward pivot axis and a left to right pivot axis for the mower deck with respect to the powersport vehicle, and wherein the left to right pivot axis is above the forward rearward pivot axis, and wherein the mower deck may be rotated from the cutting region facing downward to the cutting region facing forward.

A powered mower implement for a powersport vehicle having a mower deck comprising deck housing with a upper plate portion and a downwardly extending skirt portion at an outer periphery of the mower deck housing, the mower deck housing defining a cutting region below the upper plate portion, the mower deck further comprising a plurality of wheels positioned about the periphery of the mower deck housing, a suspension assembly mounted to and extending upwardly from the mower deck, an implement hitch coupling portion at a rearward end of the suspension assembly, the implement hitch coupling portion connectable to a hitch device on the powersport vehicle, wherein the mower deck further comprises a raised platform with a motor receiving region rearwardly and centrally mounted on the upper plate portion, the raised platform supporting a drive shaft with a drive pulley positioned above the upper plated portion and below the raised platform, the mower deck further providing three mower blades with three mower blade shafts supported by the upper plate portion, each mower blade shaft having a pulley fixed thereto and positioned above the upper plate portion, a belt connecting the drive pulley to the respective pulleys of the three mower blade shafts.

In embodiments, A powered mower implement for a powersport vehicle has a mower deck with a motor mounted or mountable thereon, the motor mounted or mountable at a motor mount region, a suspension assembly mounted to and extending upwardly from the mower deck, an implement hitch coupling portion at a rearward end of the suspension assembly, the implement hitch coupling portion connectable to a hitch device on the powersport vehicle, wherein the mower deck comprises a deck housing with a upper plate portion and a downwardly extending skirt portion at an outer periphery of the mower deck housing, the mower deck housing defining a cutting region below the upper plate portion, the mower deck further comprising a plurality of wheels positioned about the periphery of the mower deck housing, wherein the suspension system comprises a pair of deck hinge brackets fixed to the mower deck, a first deck hinge bracket positioned at or proximate to a rearward margin of the mower deck, a second deck hinge bracket positioned forward of the motor mount region, an intermediate support frame positioned above and extending about the motor receiving region, the intermediate support frame having a forward support frame portion forward of the motor receiving region, a left support frame portion above and to the left of the motor receiving region, a right support frame portion above and to the right of the motor receiving region, and a rearward support frame portion rearward of the motor receiving region, wherein the forward support frame portion is pivotally connected to the second deck hinge bracket, the rearward support frame portion is pivotally connected to the first deck hinge bracket providing a pivoting connection with a forward rearward axis, the suspension system further comprises an upper rearward suspension frame having a pair of lateral arm members pivotally connected to the intermediate support frame at the left frame support portion and at the right frame support portion providing a pivot connection with a left-right pivot axis between the intermediate support frame and the upper rearward suspension frame, each of the pair of lateral arm members extending rearwardly to the implement hitch coupling portion and being coupled thereto, when the mower implement is attached to a powersport vehicle, with the implement hitch couple portion hitched to a hitch device on the powersport vehicle, the mower deck is rotatable from a position with the cutting region downwardly to a position with the cutting region facing forwardly.

A feature and advantage of embodiments is a powered implement where an electric motor, being the heaviest singular component of the powered implement, is positioned within a suspension assembly that provides two degrees of freedom of motion to the implement with respect to the powersport vehicle to which it is hitched. The suspension assembly axes extending through the electric motor minimizing the weight of the motor affecting the positioning of the implement.

The above summary of the various representative embodiments of the invention is not intended to describe each illustrated embodiment or every implementation of the invention. Rather, the embodiments are chosen and described so that others skilled in the art can appreciate and understand the principles and practices of the invention. The figures in the detailed description that follow more particularly exemplify these embodiments.

### BRIEF DESCRIPTION OF THE DRAWINGS

The disclosure can be understood in consideration of the following detailed description of various embodiments in connection with the accompanying drawings, in which:
FIG. 1 is a perspective view of a powersports vehicle, according to an embodiment of the disclosure;
FIG. 2 is a block diagram of a powersports vehicle with a modular vehicle hitch-and-implement system mounted to both a rear and front end of the powersports vehicle, according to an embodiment of the disclosure;
FIG. 3 is a block diagram of an electrical power distribution system of a modular vehicle hitch-and-implement system optimized for an electric powersports vehicle, according to an embodiment of the disclosure;
FIG. 4 is a block diagram of a communications and control system of a modular vehicle hitch-and-implement system optimized for an electric powersports vehicle, according to an embodiment of the disclosure;
FIG. 5 is a block diagram of an electrical power distribution system of a modular vehicle hitch-and-implement system optimized for an internal-combustion-engine powersports vehicle, according to an embodiment of the disclosure;
FIG. 6 is a block diagram of a communications and control system of a modular vehicle hitch-and-implement system optimized for an internal-combustion-engine powersports vehicle, according to an embodiment of the disclosure;
FIG. 7 is a perspective view of a hitch-and-implement system for a powersports vehicle, according to an embodiment of the disclosure;
FIG. 8 is a perspective view of a hitch mount of the hitch-and-implement system of FIG. 7;
FIG. 9 is a front view of a hitch mount of the hitch-and-implement system of FIG. 7;
FIG. 10 is a rear view of a hitch mount of the hitch-and-implement system of FIG. 7;
FIG. 11 is a right-side view of a hitch mount of the hitch-and-implement system of FIG. 7;
FIG. 12 is a left-side view of a hitch mount of the hitch-and-implement system of FIG. 7;
FIG. 13 is a top view of a hitch mount of the hitch-and-implement system of FIG. 7;
FIG. 14 is a bottom view of a hitch mount of the hitch-and-implement system of FIG. 7;
FIG. 15 is a perspective view of a modular vehicle hitch device of the hitch-and-implement system of FIG. 7, in an intermediate position;
FIG. 16 is a perspective view of a modular vehicle hitch device of the hitch-and-implement system of FIG. 7, in a raised position;
FIG. 17 is a perspective view of a modular vehicle hitch device of the hitch-and-implement system of FIG. 7, in a lowered position;
FIG. 18 is a front view of a modular vehicle hitch device of the hitch-and-implement system of FIG. 7;
FIG. 19 is a rear view of a modular vehicle hitch device of the hitch-and-implement system of FIG. 7;
FIG. 20 is a right-side view of a modular vehicle hitch device of the hitch-and-implement system of FIG. 7, in an intermediate position;
FIG. 21 is a right-side view of a modular vehicle hitch device of the hitch-and-implement system of FIG. 7, in a raised position;
FIG. 22 is a right-side view of a modular vehicle hitch device of the hitch-and-implement system of FIG. 7, in a lowered position;
FIG. 23 is a left-side view of a modular vehicle hitch device of the hitch-and-implement system of FIG. 7;
FIG. 24 is a top view of a modular vehicle hitch device of the hitch-and-implement system of FIG. 7;
FIG. 25 is a bottom view of a modular vehicle hitch device of the hitch-and-implement system of FIG. 7;
FIG. 26 is a right-side view of an implement of the hitch-and-implement system of FIG. 7;
FIG. 27 is a left-side view of an implement of the hitch-and-implement system of FIG. 7;
FIG. 28 is a front view of an implement of the hitch-and-implement system of FIG. 7;
FIG. 29 is a rear view of an implement of the hitch-and-implement system of FIG. 7;
FIG. 30 is a top view of an implement of the hitch-and-implement system of FIG. 7;
FIG. 31 is a perspective view of an implement of the hitch-and-implement system of FIG. 7;
FIG. 32 is a front view of the hitch-and-implement system of FIG. 7, with the hitch device coupled to the hitch mount and the implement coupled to the hitch device;
FIG. 33 is a rear view of the hitch-and-implement system of FIG. 7, with the hitch device coupled to the hitch mount and the implement coupled to the hitch device;
FIG. 34 is a perspective view of a hitch mount and a powersports vehicle bumper assembly configured to couple to the hitch mount, according to an embodiment of the disclosure;
FIG. 35 is a right-side view of a hitch mount and a powersports vehicle bumper assembly configured to couple to the hitch mount, according to an embodiment of the disclosure;
FIG. 36 is a front view of a joystick for controlling a hitch-and-implement system, according to an embodiment of the disclosure;
FIG. 37 is a right-side view of the joystick of FIG. 36;
FIG. 38 is an illustration of a joystick for controlling a hitch-and-implement system mounted in an armrest of a powersports vehicle;
FIG. 39 is a flowchart of a method of distributing electrical power to a hitch-implement system, according to an embodiment of the disclosure;
FIG. 40 is a flowchart of a method of controlling a modular vehicle hitch and implement for a powersports vehicle, according to an embodiment of the disclosure; and
FIG. 41 is a flowchart of a method of operating a hitch-and-implement system, according to an embodiment of the disclosure.
FIG. 42 is a perspective view of a powersports vehicle with a mower implement in an operational mode.
FIG. 43 is a perspective view of a powersports vehicle with a mower implement.
FIG. 44 is an exploded view of a mower implement, a hitch device for a powersports vehicle, and a mounting plate attachable to the powersports vehicle that tool-lessly receives the hitch device.
FIG. 45 is an exploded view of the suspension system of a mower implement in accord with embodiments.
FIG. 46 is a plan view of a mower implement in accord with embodiments.
FIG. 47 is a forward looking elevational view at the backside of the mower implement.
FIG. 48 is a perspective view of a mower implement attached to a powersports vehicle with a cover removed illustrating a pulley system with a belt.
FIG. 49 is a perspective view of a portion of a mower implement depicting a motor module unit in a suspension system on a mower deck.
FIG. 50 is a perspective view of a portion of a mower implement depicting a receiving region for a motor module unit in a suspension system on a mower deck.
FIG. 51 is a front perspective view of a powersports vehicle with a mower implement in flipped up orientation for maintenance and storage.
FIG. 52 is a side perspective view of powersports vehicle of FIG. 11, with the mower implement in flipped up orientation for maintenance and storage.
FIG. 53 is a top plan view of a motor module unit.
FIG. 54 is a perspective view of an adapter of a modular motor unit.
FIG. 55 is another perspective view of the adapter of FIG. 14.
FIG. 56 is a perspective view of the bottom side of a modular motor unit.
FIG. 57 is a close-up perspective view of a cooperating coupler in a receiving region of a mower deck for a modular motor unit; and
FIG. 58 is a flow chart depicting and describing a method of tool-lessly removably coupling a modular electric motor unit to an implement.

### DETAILED DESCRIPTION

For the purposes of understanding the disclosure, reference will now be made to the embodiments illustrated in the drawings, which are described below. While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all combinations, modifications, equivalents, and alternatives falling within the spirit and scope of the invention as defined by the appended claims.

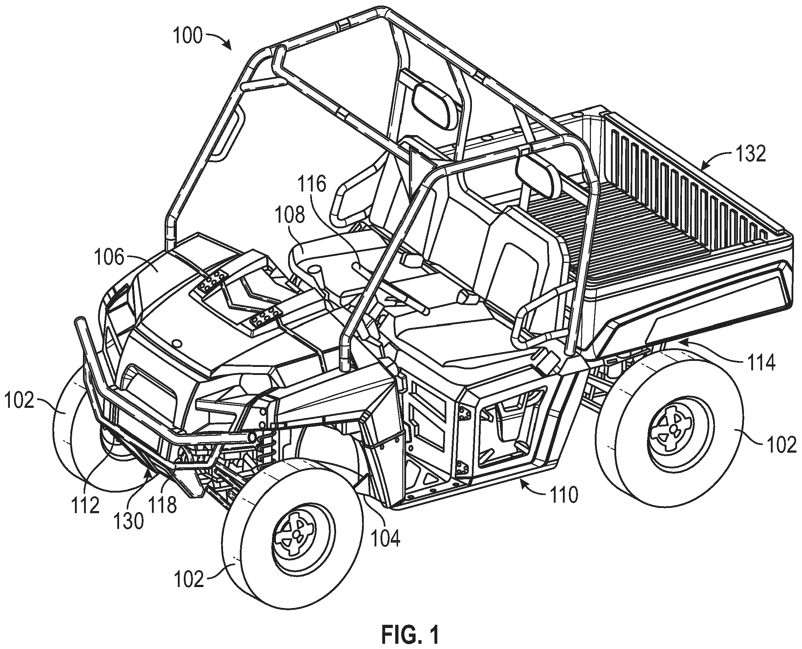

Referring to FIG. 1, an embodiment of powersports vehicle 100 is depicted. Powersports vehicles may include side-by-side powersports vehicles, all-terrain vehicles (ATVs), utility vehicles (UTVs), motorcycles, snow vehicles, and similar types of recreational or utility vehicles. In an embodiment, powersports vehicle 100 includes ground-engaging members 102, frame 104, body portions 106, seats 108, prime mover, e.g., engine, 110, charging system 111, along with various operating systems, such as transmission system 112, braking system 114, steering system 116, and so on.

Ground-engaging members 102 may include a one or more wheels, tracks, including endless tracks, skis or other suitable devices which support vehicle 100 relative to the ground. Frame 104 is supported by the ground-engaging members and provides support to various other components and systems of powersports vehicle 100. Body portions 106 may be connected to portions of frame 104, providing protection to a driver and passenger of powersports vehicle 100. Seats 108 are directly or indirectly connected to frame 104 and provide support for the driver and passenger(s) of powersports vehicle 100.

Prime mover 110 may comprise an internal-combustion engine, electric motor, electric-combustion hybrid motor, or similar, for powering powersports vehicle 100. Transmission system 112 is coupled to prime mover 110 and ground-engaging members 102, and may include a shiftable transmission, continuously variable transmission (CVT), electrical variable transmission (EVT), e-CVT, and so on, depending on the type of prime mover and vehicle.

Braking system 112 provides a braking function for powersports vehicle 100 and is coupled to one or more ground engaging members 102, and in some embodiments, to prime mover 110 and/or transmission system 112.

Steering system 116 is coupled to one or more ground-engaging members 102, such as front wheels 102, as depicted. Steering system 116 may also include a graspable steering device, such as a steering wheel.

Powersports vehicle 100 includes front bumper 118, which may be located at front end 130 of powersports vehicle 100, and/or at rear end 132.

Further details and embodiments of known powersports vehicles are depicted and described in: U.S. Patent No. 7,950,486, issued May 31, 2011, entitled "Vehicle;" U.S. Patent No. 10,166,836, issued Jan. 1, 2019, entitled "Utility vehicle;" and U.S. Patent Pub. No. 2020/0198561 A1, published June 25, 2020, entitled Managing Recreational Vehicles and Accessories, all of which are assigned to Polaris Industries, Inc., and all of which are incorporated herein by reference in their entireties.

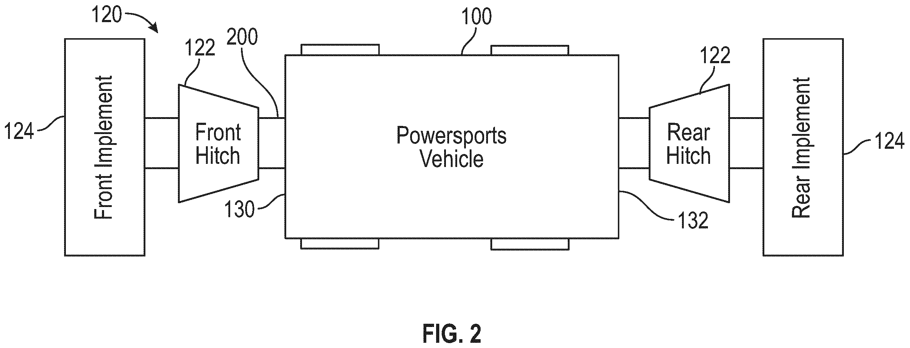

Referring also to FIG. 2, a block diagram of powersports vehicle 100 with hitch-and-implement system 120 for connecting and powering modular powersports vehicle hitch device 122 (referred to generally herein as "hitch device 122") and implement 124 is depicted. In an embodiment, hitch-and-implement system 120 includes hitch mount 200 mounted to powersports vehicle 100, hitch device 122 coupled to hitch mount 200, and implement 124 coupled to hitch device 122.

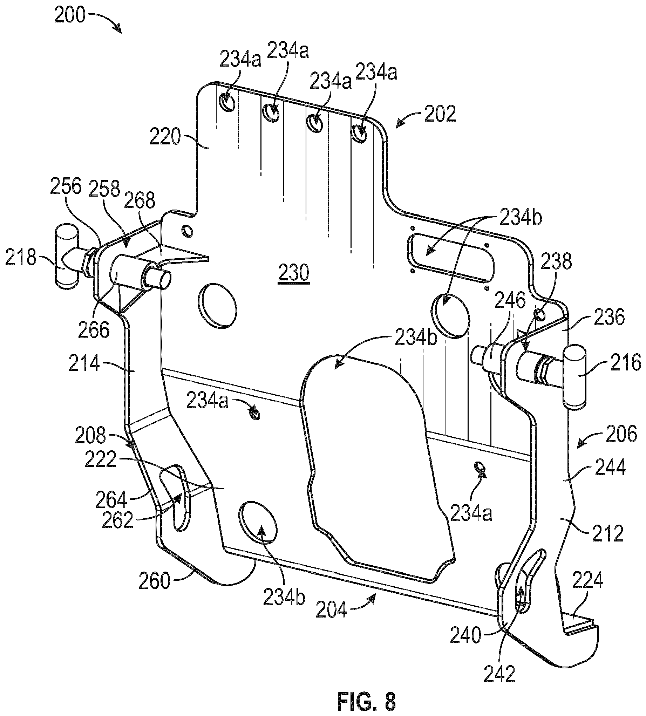

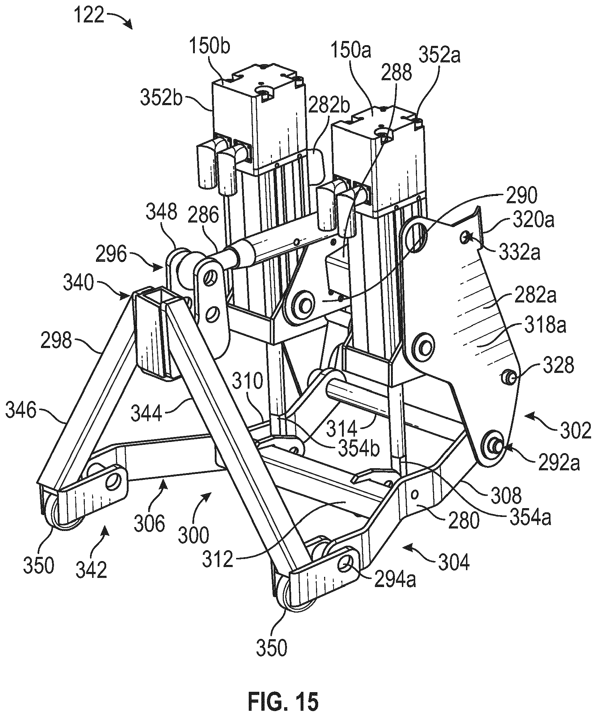

An embodiment of hitch mount 200 is depicted in FIGS. 8-14 and described below. An embodiment of hitch device 122 is depicted in FIGS. 15-25 and is described in further detail below. Generally, hitch device 122 is configured to attach to powersports vehicle 100, and to connect to implement 124. Hitch 122 may be configured to attached to powersports vehicle 100 front end 130 and/or rear end 132, as depicted in FIG. 2. However, it will be understood that hitch device 122 is not limited to connecting to only ends 130 and/or 132, but may also be configured to connect to other portions of powersports vehicle 100, including connecting to a left-side or right side of powersports vehicle 100.

For the sake of illustration, a hitch device 122 is depicted attached to front end 130 and another hitch device 122 is depicted attached to rear end 132. However, it will be understood that system 120 may include one or more hitch devices 122 and one or more implements 124, and that hitch device 122, in an embodiment, is configured to connect to any available location on powersports vehicle 100.

In embodiments, and as described further below, hitch device 122 is configured to move up and down relative to a ground plane or surface on which vehicle 100 rests, which in turn raises and lowers attached implement 124. In other embodiments, other degrees of freedom and movement are contemplated.

Implement 124 may comprise any of a variety of electromechanical devices or implements with an electric implement motor assembly and/or actuator for performing tasks in combination with powersports vehicle 100, including for snow removal, driveway cleaning, landscaping, agriculture, and so on. Examples of implements 124 include a mover, snowblower, plow, rotary broom, bucket, rake, harrow, brush mower, wood chipper, power grader, box scraper, post driver, soil conditioner, landscape rake, spreader, sprayer, power washer, auger, brush cutter, log splitter, vacuum collector, disc plow, tiller, trimmer mower, pallet forks, debris blower, cultivator, and planter, and so on. In some embodiments, and as described further below, implement 124 may include an actuator for positioning implement 124 in relation to hitch device 122 or an electric motor for performing implement functions, such as rotating a mower blade, impeller or rotary broom.

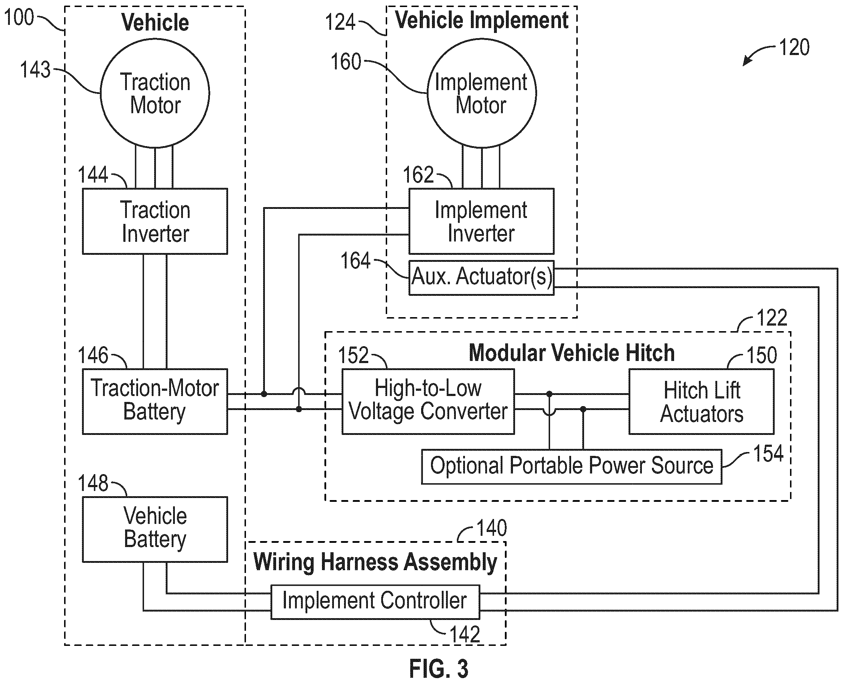

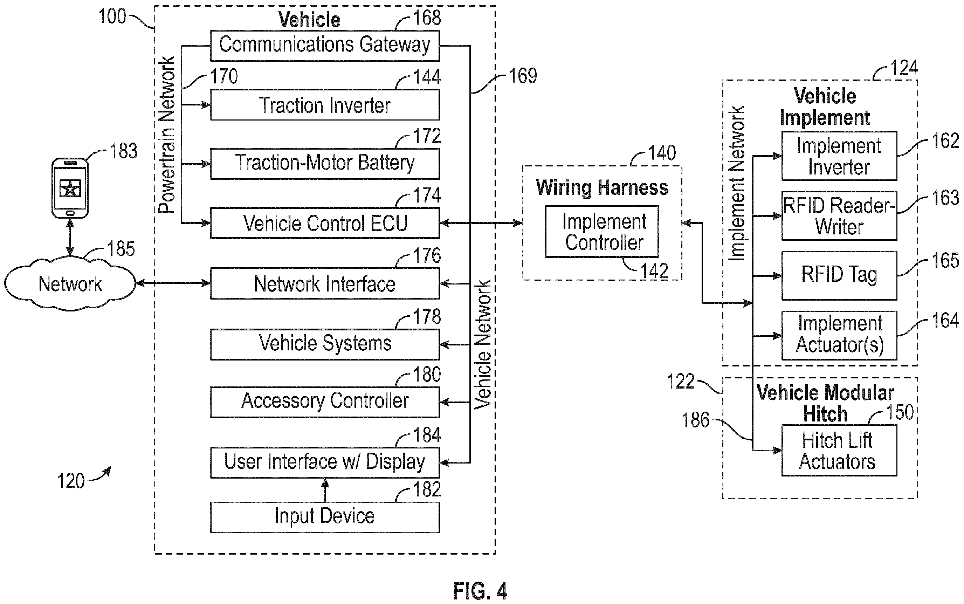

Referring to FIG. 3, a block diagram of an embodiment of hitch-and-implement system 120, depicting electrical-power distribution and connections is depicted. A block diagram of an embodiment of hitch-and-implement system 120, depicting communication and control connections is described in FIG. 4.

Referring specifically to FIG. 3, in this embodiment, hitch-and-implement system 120 is optimized for a powersports vehicle 100 that includes a battery-based prime mover, i.e., a powersports vehicle 100 that is a battery EV or BEV. More specifically, and in an embodiment, powersports BEV 100 includes traction motor 143, traction inverter 144 and traction-motor battery 146. As will be understood by those of ordinary skill in the art, traction-motor battery 146 provides energy to power traction motor 143 via traction inverter 144, in order to propel powersports BEV 100.

In this embodiment, hitch-and-implement system 120 comprises portions of powersports BEV 100, modular hitch device 122 and vehicle implement 124. As described further below, system 120 may include one or more wiring harnesses 140 in connection with implement controller 142. Wiring harnesses 140 may be part of powersports vehicle 100, as well as modular vehicle hitch 122 and implement 124, and combinations thereof. One or more implement controllers 142 may physically be located in a variety of locations, including at or on powersports vehicle 100, hitch device 122 and/or implement 124.

In this BEV-optimized embodiment, hitch-and-implement system 120 includes vehicle-associated components: traction-motor battery 146, vehicle battery 148, and implement controller 142; modular vehicle hitch device-associated components: hitch-lift actuators 150, voltage converter 152 and optional portable power source 154; and vehicle implement 124 components: implement motor 160, implement inverter 162, and optional auxiliary actuators 164.

In an embodiment of powersports BEV 100, EV traction-motor battery 146 comprises any one or more of known traction batteries that stores electrical energy for powering traction motor 143 of powersports BEV 100, and according to embodiments of the disclosure, for powering hitch device 122 and implement 124. Traction-motor battery 146 may comprise various types of battery types and compositions, such as a lead-acid battery, lithium battery, and so on. Voltage outputs of traction-motor battery 146 may vary depending on the needs of a particular powersports BEV 100, but in one embodiment, the voltage of traction-motor battery 146 is 48 VDC. In other embodiments, a voltage of traction-motor battery 146 may be in a range of 12 VDC to 80 VDC.

Vehicle battery 148, in an embodiment, will be configured to provide power to electrically-powered devices (not shown) of vehicle 100, other than traction motor 143. Such electrically-powered devices may include vehicle headlamps, interior lamps, in-vehicle infotainment (IVI) system, and other such electrically-powered devices. Vehicle battery 148, in an embodiment, may have a storage capacity that is less than traction-motor battery 146 due to the relatively lower power draw of the connected electrically-powered devices as compared to the significant power draw of the traction motor. Vehicle battery 148 may also comprise various types of battery technologies, such as lead-acid, alkaline, lithium, gel and so on. In an embodiment, vehicle battery 148 provides a 12 VDC output, though may comprise other voltage outputs in other embodiments.

Vehicle battery 148, in an embodiment, is in electrical connection with implement 124 via wiring harness assembly 140, providing power to implement controller 142 and when present, and in some embodiments, providing power to auxiliary actuators 164 of implement 124.

Wiring harness assembly 140, in an embodiment, comprises a plurality of insulated conductors or wires, electrical connectors, and various electrical components, which may also include implement controller 142. Wiring harness assembly 140 generally serves as an electrical interface between vehicle 100 and hitch device 122 and between vehicle 100 and implement 124. A portion of wiring harness assembly 140 may be located at least partially on or at vehicle 100; a portion of wiring harness assembly 140 may also be on or at hitch device 122 and/or implement 124.

In an embodiment, and as depicted, traction-motor battery 146 is in electrical connection with, and provides power to, hitch device 122 and implement 124. More specifically, and in the embodiment depicted, traction-motor battery 146 is in electrical connection with high-to-low voltage converter 152, which is in electrical connection with hitch-lift actuators 150 and optional portable power source 154.

In an embodiment, high-to-low voltage converter 152 converts relatively-higher direct-current (DC) power received from traction-motor battery 146 and outputs a relatively-lower direct DC power for use by hitch-lift actuators 150 and optional portable power source 154. In an embodiment, voltage converter 152 outputs 12 VDC.

In this embodiment, hitch-lift actuators 150 are electrically powered and configured to move hitch device 122 as needed. Hitch-lift actuators 150 are described in greater detail below with respect to hitch device 122.

Portable power source 154, when present, provides an additional power source or power station for powering electrically-powered devices other than those of vehicle 100, hitch device 122 and implement 124. For example, portable power source 154 may be used to power or charge electrically-powered tools, lights, and so on. In an embodiment, portable power source 154 may provide a DC power, though in other embodiments, portable power source 154 may include an inverter to provide portable alternating-current (AC) power. Further, although depicted as located on or at hitch device 122, in other embodiments, portable power source 154 may be located on or at vehicle 100 or implement 124.

In an embodiment, portable power source 154 may comprise a housing, power-conditioning components, and connectors, and may be configured to connect to various electrically-powered devices.

Traction-motor battery 146, in an embodiment, and as depicted, is also in electrical connection with implement 124. More specifically, traction-motor battery 146 may be in electrical connection with implement inverter 162, which converts received DC power to AC power, which may be 3-phase AC power, for use by implement motor 160.

Referring to FIG. 4, an embodiment of a communication and control system of hitch-and-implement system 120 optimized for a powersports BEV 100 is depicted. In this embodiment, hitch-and-implement system 120 includes multiple components associated with each of vehicle 100, vehicle modular hitch 122 and vehicle implement 124.

In this embodiment, powersports BEV 100 includes communications gateway 168, vehicle network or bus 169, powertrain network or bus 170, traction inverter 144, traction-motor battery 172, vehicle control ECU (electrical control unit) 174, network interface 176, vehicle systems 178, accessory controller 180, input device 182, and user interface 184, which may include a display device.

In an embodiment, vehicle control ECU, traction-motor battery 172 and traction inverter 144 are in electrical communication with powertrain bus 170 and communications gateway 168.

Vehicle control ECU 174 may comprise one or more electronic control units (ECUs) having processors and memory for controlling electrical systems or subsystems of powersports vehicle 100. Vehicle control ECU 174 may comprise a single control device or distributed control devices. Functions of vehicle control ECU 174 may be performed by hardware and/or computer instructions saved on non-transient, computer-readable storage mediums. Vehicle control ECU 174 controls most processes related to operation of powersports vehicle 100, including powertrain operations such as controlling an output of traction inverter 144 which powers traction motor 143.

Vehicle control ECU 174 is in electrical communication with network interface 176, vehicle systems 178, accessory controller 180 and user interface 184 via vehicle network 169. In an embodiment, vehicle network 169 comprises a network bus, such as a control-area network (CAN) bus, local interconnect network (LIN) bus or similar.

Network interface 176, in an embodiment, is configured to connect to external computing device 183 via network 185.

In an embodiment, external computing device 183 may comprise one or more computing devices, such as a mobile computing device, stationary or desktop computing device, server, and so on.

In an embodiment wherein external computing device 183 is a hand-held remote computing device, computing device 183 may comprise a smart phone, tablet or other such device. A mobile version of external computing device 183 may connect to network 185 and powersports vehicle 100 via a wireless connection technology, such as via WiFi^{®}, Bluetooth, radio-frequency (RF), cellular, satellite and other such wireless networking technologies.

External computing device 183 may include a user interface for receiving user input, such as a touch screen or keyboard, and for displaying and conveying information to a user, along with a processor and memory.

External computing device 183 may access computer program software stored in a server or other computer device connected to network 185, and provide data and/or instructions to powersports vehicle 100.

Network 185 may comprise any of a variety of wide-area computer networks, local-area computer networks, personal-area networks, and so on, such as the Internet.

Vehicle systems 178 generally includes a variety of systems of powersports vehicle 100, such as vehicle operating systems, geolocation systems, sensing systems and so on. Vehicle operating systems may include braking, acceleration/deceleration, steering, suspension, powertrain, electrical, and other such systems.

Accessory controller 180, in an embodiment, may comprise one or more controllers or ECUs for controlling accessories or accessory systems of vehicle 100, such as lighting, infotainment, and so on.

User interface 184 may comprise any of a variety of human-machine interface devices configured to receive input from a user and transmit the received input to vehicle control ECU 174, as well as to receive an output from vehicle control ECU 174 and communicate or present that output to a user. In an embodiment, user interface 184 includes an interface controller, input devices, such as input device 182, output devices, and a memory.

The interface controller of user interface 184 may be configured to control operations of user interface 184 and its subsystems, as well as input and output devices. The interface controller may include or form a portion of a processing system that includes one or more computing devices that may include memory, processing and communication hardware. The interface controller may be a single device or a distributed device, and functions may be performed by hardware and/or as computer instructions on a non-transient computer-readable storage medium, such as a memory, which shares the properties described above with respect to memory. The interface controller may interpret input from input devices, particularly "touches" from a user touching a touch-screen display of the user interface 184.

Input devices 182 may include joysticks, touch-screen displays, frequency-operated buttons (FOBs), buttons, switches, selectors and so on, as well as combinations thereof.

Output devices of user interface 184 may include displays, touch screens (that function as both output and input devices), lights, audio devices, tactile devices and other such suitable output devices.

Communications gateway 168, when present, and as depicted in this embodiment, isolates powersports vehicle 100 electrical devices connected to a first vehicle network, such as powertrain network 170 from other vehicle 100 electrical devices connected to another vehicle network, such as vehicle network 169. Embodiments of multi-network vehicle systems with a communication gateway, and their associated advantages are described in Appendix A: Secure Multi-Bus Control System for Recreational Vehicles, which is incorporated by reference herein in its entirety.

In an embodiment, powersports vehicle 100 is in electrical communication with implement controller 142, which in turn is in electrical communication with hitch device 122 and implement 124 via implement network or bus 186. In an embodiment, vehicle control ECU 174 is communicatively connected to implement controller 142 via a wiring harness, which may be wiring harness 140. In an embodiment, vehicle control ECU 174 may be connected to implement controller 142 via a wiring harness dedicated to communications, rather than wiring harness 140 which may be used to transmit power from vehicle 100 to hitch device 122 and implement 124.

Implement controller 142 is in electrical communication with implement inverter 162, optional radio-frequency identification (RFID) reader 163 and implement actuator 164 of implement 124, as well as hitch-lift actuators 150 of hitch device 122, via implement network 186.

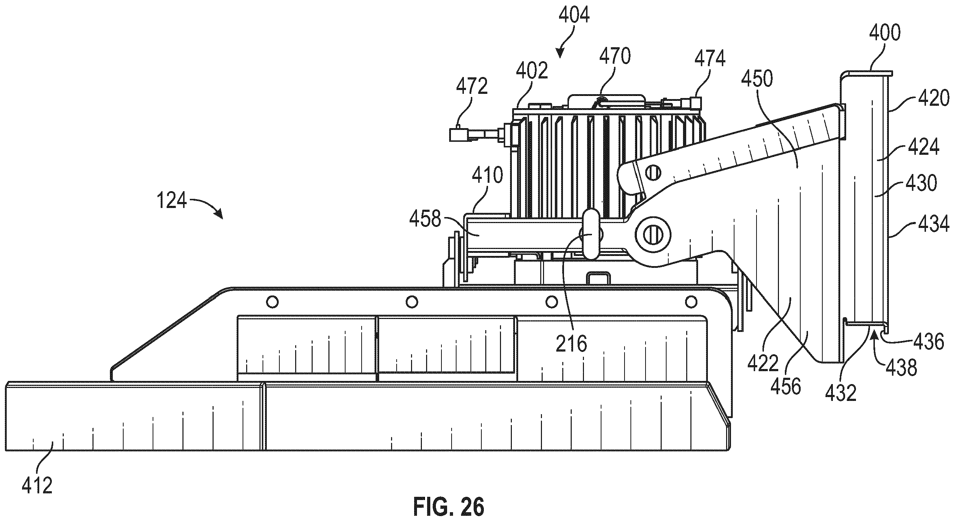

As described further below, in an embodiment, implement 124 may include RFID reader/writer 163 configured to read an RFID tag 165 (see also FIG. 26). In an embodiment, RFID reader/writer 163 is located on detachable implement motor 160, while RFID tag is located on a non-detachable portion of implement actuator 164.

In an embodiment, implement controller 142 may include one or more ECUs having processors and memory for controlling hitch device 122 and implement 124. Implement controller 142 may comprise a single control device or distributed control devices. Functions of implement controller 142 may be performed by hardware and/or computer instructions saved on non-transient, computer-readable storage mediums.

In general operation, and as will be described further below, a user provides input relating to desired operation of hitch device 122 and/or implement 124 via input device 182 and user interface 184. Data corresponding to the user input is transmitted to vehicle control ECU and/or to implement controller 142 over vehicle network 169. Implement controller 142 transmits data and commands corresponding to the user input over implement network 186 resulting in actuation of hitch-lift actuators 150 and implement actuator 164 and powering of implement motor 160 (FIG. 3) through implement inverter 162.

The use of electrical hitch-lift actuators 150, rather than hydraulic or other types of actuators allows for precise and fast movement of hitch device 122 and attached implement 124. With electric hitch-lift actuators 150 controlled by implement control 142 a position of the actuator and the precise force of the actuator can be controlled very precisely. In an embodiment, this allows implement 124 to be held a controlled distance above the ground, or on the ground with a controlled downward force while vehicle 100 and attached implement 124 are in motion and traveling over the ground. In an embodiment, a downward force is continuously varied to in order to follow the ground. In contrast, a traditional hydraulic float function only allows the full weight of the implement to be imparted on the ground, while electronic actuators 150 controlled by controller 142 may follow the ground with less force, or more force, which is very beneficial for certain implements and applications. For example, such variable force may prevent a snowblower attachment from digging into the ground as it travels over uneven terrain.

In an embodiment, the communication and control system of hitch-and-implement system 120 is configured to monitor vehicle suspension parameters and continuously adjust implement 124 height using actuators 150, based on suspension data.

Communication and control system of hitch-and-implement system 120 may be configured to monitor traction-motor battery 146 and/or vehicle battery 148 charge levels and overall battery health, as well as other factors as part of a power-monitoring and load-shedding scheme. In one such embodiment, as battery health of one or both of batteries 146 and 148 changes, power to various electrical loads, including the load represented by implement motor 160, may be selectively reduced by vehicle ECU 174 in communication with implement controller 142. Such embodiments may prioritize the charge and health of traction-battery 146 ensuring continued operation of powersports BEV 100. Systems, devices and methods for load-shedding and load prioritization are described in Appendix B, entitled "Electrical Power Management of Recreational Vehicles," which is incorporated herein in its entirety.

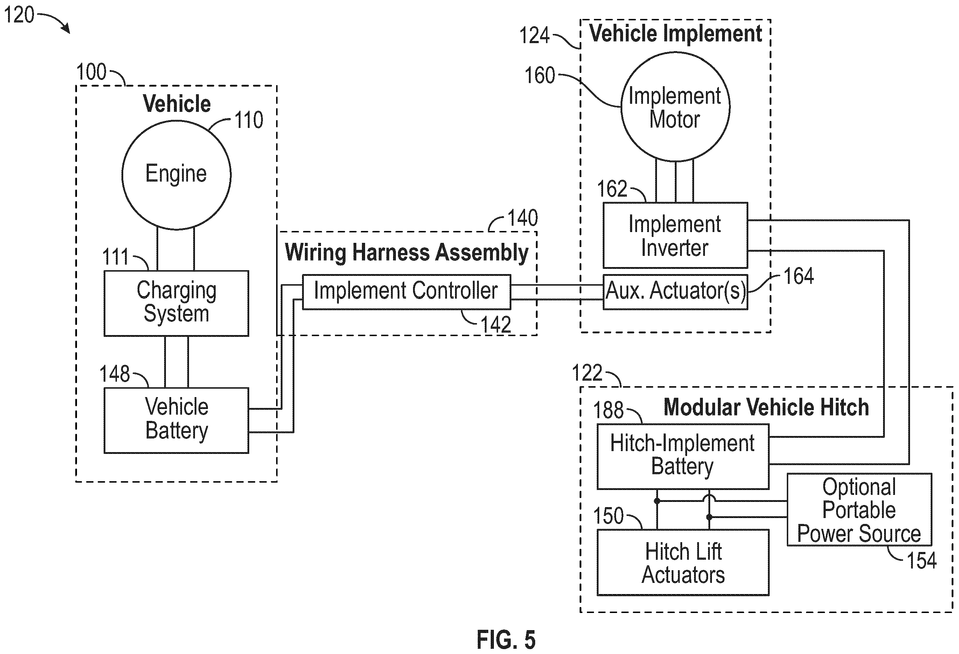

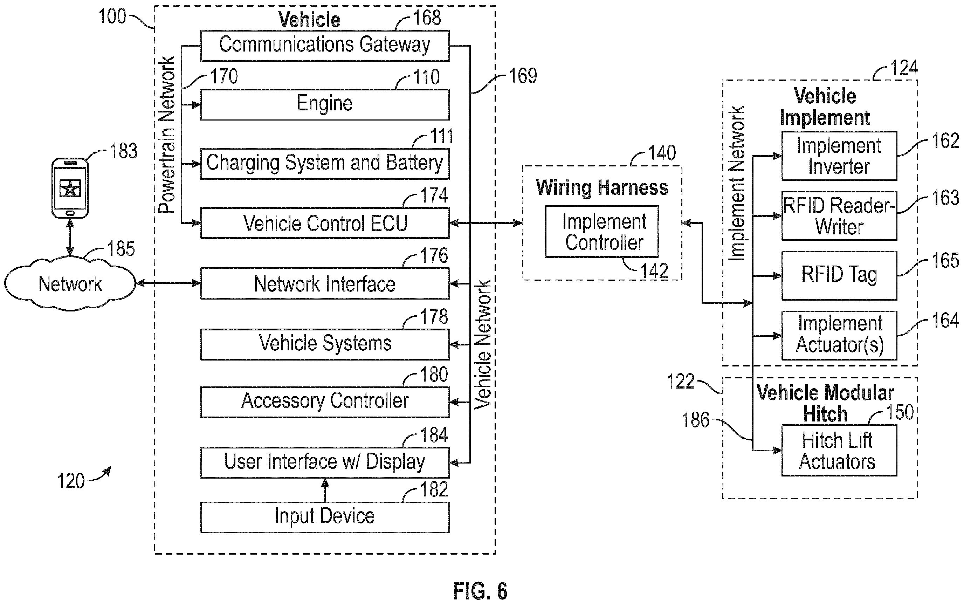

Referring to FIGS. 5 and 6, embodiments of hitch-and-implement system 120 optimized for an internal-combustion-engine (ICE) powersports vehicle 100 are depicted. More specifically, FIG. 5 depicts a block diagram of an embodiment of an electrical distribution system of system 120, while FIG. 6 depicts a block diagram of an embodiment of a communication and control system.

Referring specifically to FIG. 5, the electrical distribution system for ICE powersports vehicle 100 is similar to the electrical distribution system for powersports BEV 100 depicted in FIG. 3 and as described above.

In this ICE embodiment, vehicle 100 includes a prime mover that is an internal-combustion engine 110 powering a charging system 111 in electrical connection with vehicle battery 148.

Implement controller 142 receives power from vehicle battery 148 via wiring harness assembly 140, which controls power to implement 124 and its one or more auxiliary actuators 164. In another embodiment, auxiliary actuators 164 may receive power through another battery, such as hitch-implement batter 188, which is described below.

In this embodiment, hitch-and-implement system 120 includes hitch-implement battery 188 in electrical connection with hitch-fift actuators and optional portable power source 154 of hitch device 122 and implement inverter 162, thereby providing electrical power to those devices. As described briefly above, hitch-implement battery 188 may also provide power to auxiliary actuator 164 of implement 124. Although hitch-implement battery 188 is depicted as being located at or on hitch device 122, hitch-implement battery 188 may alternately be located elsewhere, such as on or at implement 124 or even vehicle 100.

Referring to FIG. 6, a block diagram of an embodiment of a communication and control system of hitch-and-implement system 120 for an ICE powersports vehicle 100 is depicted. In an embodiment, and as depicted, the ICE-optimized version of the communication and control system of hitch-and-implement system 120 is substantially similar to the BEV-optimized version of the communication and control system of hitch-and-implement system 120 depicted in FIG. 4 and described above. In an embodiment, differences between the BEV and ICE versions of the communication and control system of hitch-and-implement system 120 vary with respect to powertrain components of vehicle 100, namely that the ICE version includes an engine 110 and charging system with battery 111, instead of traction inverter 144 and traction-motor battery 172. Otherwise, the description of communication and control system of hitch-and-implement system 120 relating to FIG. 4 applies to the system of FIG. 6.

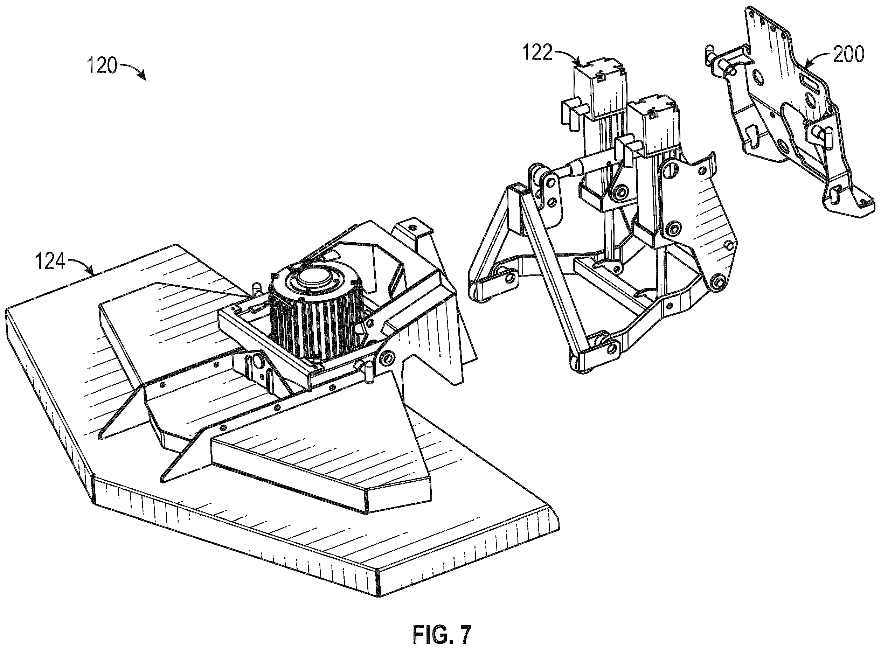

Referring to FIG. 7, a perspective view of an embodiment of hitch-and-implement system 120 is depicted. In this embodiment, hitch-and-implement system 120 includes hitch mount 200, modular hitch device 122 and implement 124. As described further below, hitch mount 200 is configured to mount to powersports vehicle 100. In an embodiment, and as depicted, hitch mount 200 is configured to be semi-permanently or permanently coupled to powersports vehicle 100. In an alternate embodiment, hitch mount 200 is detachably connected to powersports vehicle 100. Hitch mount 200 is configured to detachably receive, or connect to, hitch device 122. Implement 124 is configured to detachably connect to hitch device 122.

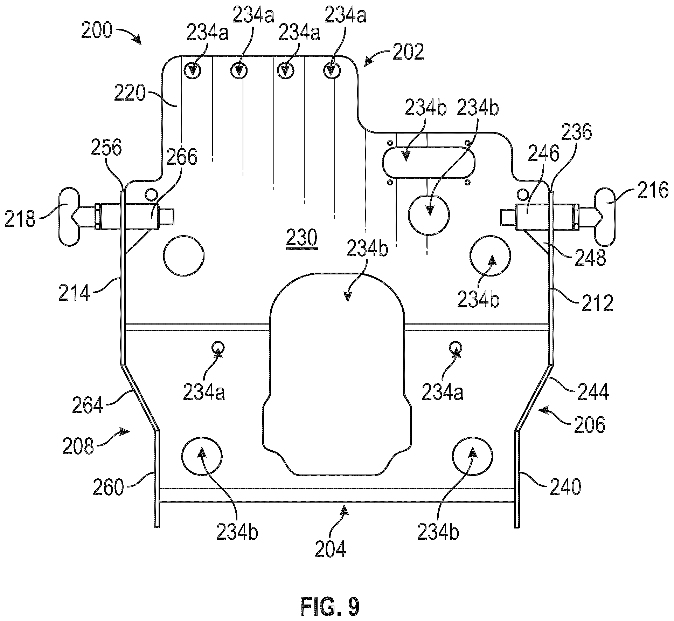

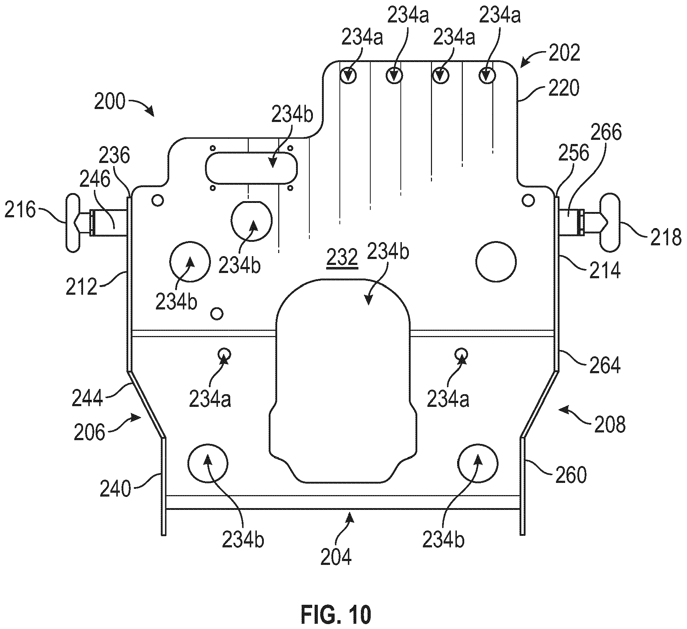

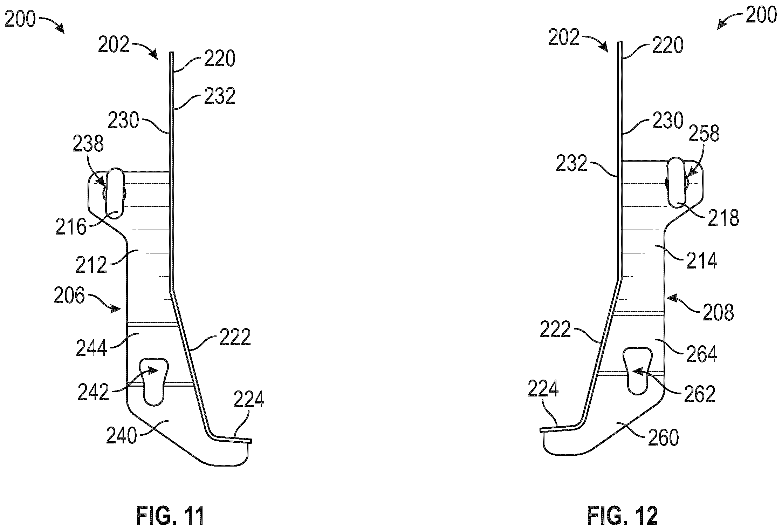

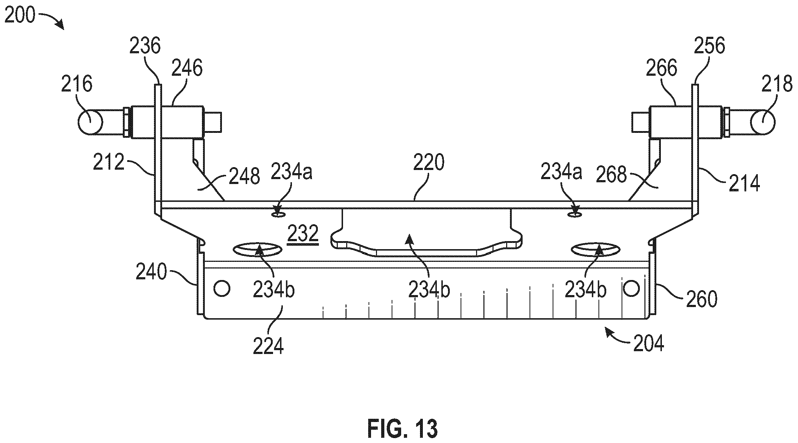

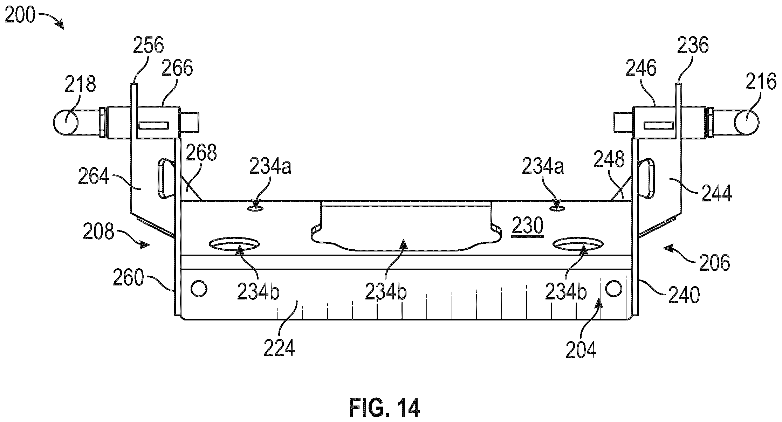

Referring to FIGS. 8-14, an embodiment of hitch mount 200 is depicted. FIG. 8 is a perspective view of hitch mount 200; FIG. 9 is a front view of hitch mount 200; FIG. 10 is a rear view of hitch mount 200; FIG. 11 is a right-side view of hitch mount 200; FIG. 12 is a left-side view of hitch mount 200; FIG. 13 is a top view of hitch mount 200; and FIG. 14 is a bottom view of hitch mount 200.

In this embodiment, hitch mount 200 comprises top end 202, bottom end 204, first or right side 206, second or left side 208, main portion 210, first or right coupling portion 212, second or left coupling portion 214, first or right pin 216 and second or left pin 218. Generally, hitch mount 200 is configured to mount to powersports vehicle 100, including ICE or BEV powersports vehicles. In an embodiment, hitch mount 200 may comprise a stand-alone mechanical device that is configured to be mounted directly or indirectly to frame 104 of powersports vehicle, or to be mounted to other portions of powersports vehicle 100. In one such embodiment, hitch mount 200 may be mounted semi-permanently, such as by using mechanical fasteners, such as nuts and bolts, requiring tools to connect and disconnect. In another embodiment, hitch mount 200 may be permanently mounted by welding hitch mount 200 to powersports vehicle 100, or by other means. In other embodiments, hitch mount 200 may be detachably connected to powersports vehicle 100, such as though the use of pins or other connectors not requiring the use of tools, i.e., a tool-less connection, similar to the detachable connections of hitch device 122 to hitch mount 200 as described further below.

In yet other embodiments, hitch mount 200 may be integrally formed with powersports vehicle 100, such as being integrated into frame 104 or another portion of powersports vehicle 100.

In an embodiment, main portion 210 forms a generally plate-like structure for connection to powersports vehicle 100, extending from top end 202 to bottom end 204 and from right side 206 to left-side 208. Main portion 210 may form different shapes and sizes to fit to various types and sizes of powersports vehicles 100. In the embodiment depicted, main portion 210 includes a plurality of generally flat plate or planar portions, including first or upper planar portion 220, second or middle planar portion 222, and third or lower planar portion 224. Upper planar portion 220 extends in a direction from top end 202 toward bottom 204 and joins with middle planar portion 222, forming an obtuse angle with middle planar portion 222. Lower planar portion 224 joins with middle planar portion 222 and extends transversely from middle planar portion 222 in a front-to-rear direction.

In an embodiment, upper, middle and lower planar portions 220, 222 and 224 are integrally formed from a common plate bent to form the three planar portions.

Main portion 210 also includes front surface 230 and rear surface 232, and defines a plurality of apertures 234, including apertures 234a and 234b. Apertures 234 may be through holes as depicted. Some apertures, such as 234a, may be used to receive fasteners to connect main portion 220 to powersports vehicle 100. Other apertures, such as apertures 234b may be configured to receive projecting portions of powersports vehicle 100 so that surface 232 may abut surfaces of powersports vehicles to a maximum extent.

In an embodiment, main portion 210 may comprise a generally strong, rigid material, such as a metal material, including steel or aluminum or similar.

Right coupling portion 212 is attached to right side 206 of main portion 220 in a top-to-bottom direction, and projects transversely away from main portion 220 in a rear-to-front direction. In the depicted embodiment, right coupling portion 212 includes top portion 236 defining pin-receiver aperture 238, bottom portion 240, aperture 242, middle portion 244, and pin receiver 246. In an embodiment, right coupling portion 212 may also include support brace 248.

In an embodiment, top, middle and bottom portions 236, 240 and 244 form an integral structure formed by bending a single plate-like material to form a first bend where top portion 236 joins middle portion 240 and a second bend where middle portion 244 joins bottom portion 240. As depicted, bottom portion 240 is offset closer to a center of main portion 220 as compared to top portion 236.

Aperture 242, in an embodiment, defines a slot or channel formed in part by middle portion 244 and bottom portion 240. Because aperture 242 is formed at a bent portion of right coupling portion 212, an opening of aperture 242 in middle portion 244 faces somewhat upwardly, in a bottom-to-top direction, while an opening of aperture 242 in bottom portion 240 faces inwardly, or in a right-to-left direction. The two aperture faces may form an obtuse angle relative to one another, including an angle greater than 180°. Further, the top portion of aperture 242 may define a diameter that is greater than a diameter of the bottom portion. Such features facilitate easy drop-in fitment of hitch device 122 to hitch mount 200.

Pin receiver 238 fits into aperture 238 and is connected to upper portion 236. In an embodiment, pin receiver 238 forms a generally cylindrical structure with a central through channel or hole for receiving pin 216. Pin receiver 238 may also include a spring and a retainer for holding pin 216 in pin receiver 238 and applying a lateral spring force to pin 216. As such, a user pulls pin 216 in a lateral, or left-to-right direction to an unlocked position to disconnect hitch device 122 from hitch mount 200 against the spring force. When hitch device 122 is removed, and a user releases pin 216, the spring force moves pin 216s back in a right-to-left direction to the locked position (as depicted).

In other embodiments, pin 216 may be retained in a pin receiver using other means that do not include a spring, such as with a key and keyway.

Support brace 248, when present, connects right coupling portion 212 to main portion 220, providing structural support and orientation of the two portions.

Left coupling portion 214 is located opposite right coupling portion 212, and is substantially the same as right coupling portion 212, though in mirror image, and therefore shares the features of right coupling portion 212 as described above. In this embodiment, left coupling portion 214 is attached to left side 208 of main portion 220 in a top-to-bottom direction, and projects transversely away from main portion 220 in a rear-to-front direction. In the depicted embodiment, left coupling portion 214 includes top portion 256 defining pin-receiver aperture 258, bottom portion 260, aperture 262, middle portion 264, and pin receiver 266. In an embodiment, left coupling portion 214 may also include support wall 268.

Referring to FIGS. 15-25, an embodiment of modular vehicle hitch device 122 is depicted.

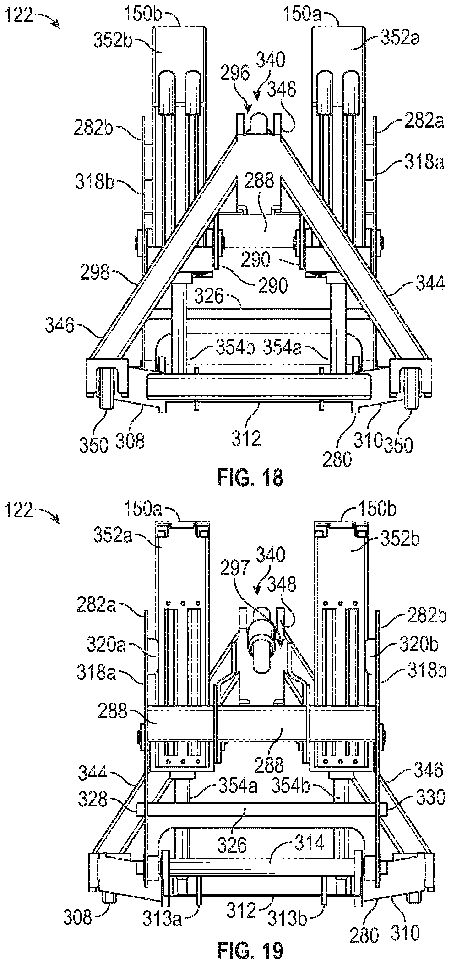

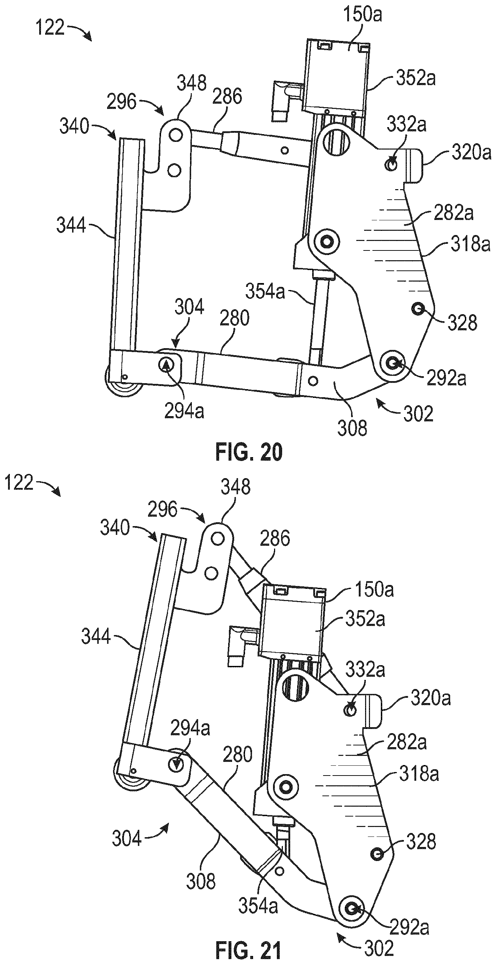

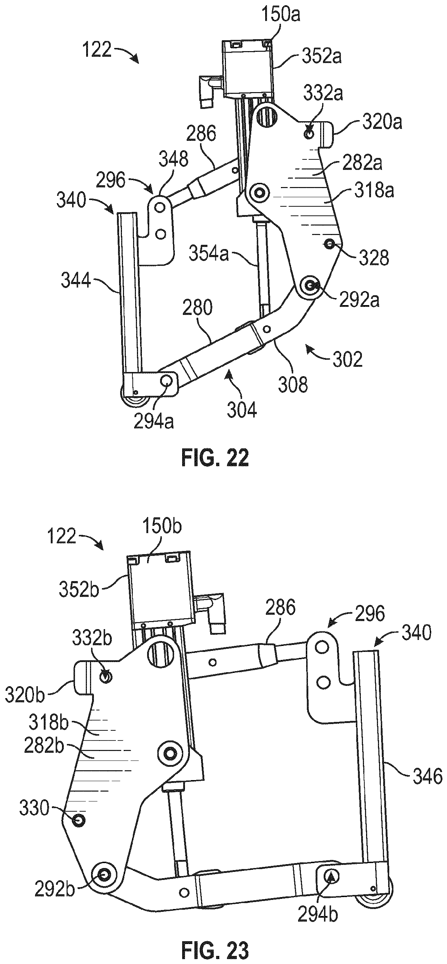

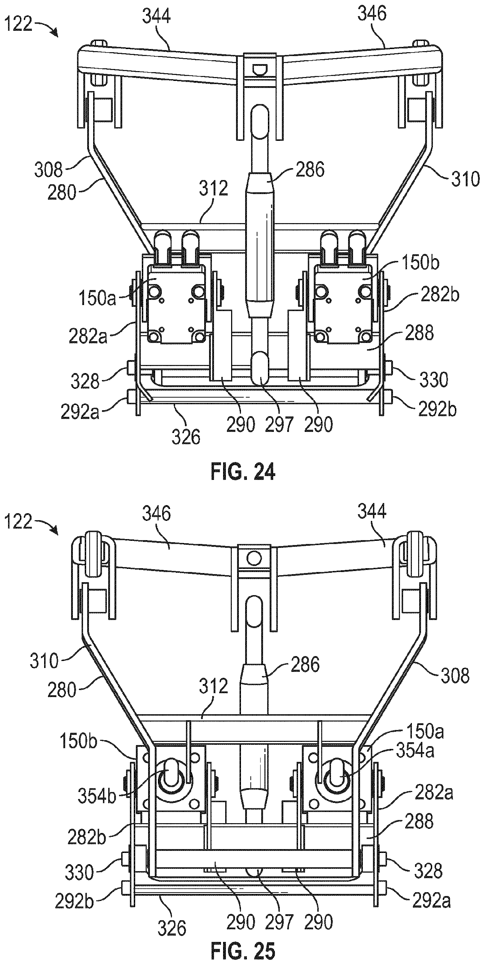

As will be explained in further detail below, FIGS. 15, 16 and 17 depict hitch device 122 in perspective views, in intermediate, raised and lowered positions, respectively. FIG. 18 is a front view of hitch device 122; FIG. 19 is a rear view of hitch device 122; FIG. 20 is a right-side view of hitch device 122 in an intermediate position; FIG. 21 is a right-side view of hitch device 122 in a raised position; FIG. 22 is a right-side view of hitch device 122 in a lowered position; FIG. 23 is a left-side view of hitch device 122; FIG. 24 a top view of hitch device 122 and FIG. 25 is a bottom view of hitch device 122.

In an embodiment, hitch device 122 comprises frame 280, hitch-vehicle coupling portion 282 (depicted as right portion 282a and left portion 282b), hitch-implement coupling portion 298, one or more actuators 150 (depicted as right actuator 150a and left actuator 150b), telescoping rod 286, cross member 288, and actuator retain-support portions 290. As also described further below, components of hitch device 122 form a number of pivot joints, including a pair of fixed pivot joints 292a and 292b pivotally connecting frame 280 to hitch-vehicle coupling portion 282, a pair of moving pivot joints 294a and 294b pivotally connecting frame 280 to a lower portion of hitch-implement coupling portion 298, moving pivot joint 296, pivotally connecting telescoping rod 286 to an upper portion of hitch-implement coupling portion 298, and fixed pivot joint 297 pivotally connecting a rear end of telescoping rod 286 to retain-support portions 288 and cross member 288. Hitch device 122 may also include various spacers and bushings, particularly at the pivot joints.

As will be made evident based on the description below and associated figures, the depicted embodiment of hitch device 122 forms a four-bar linkage, and more specifically, a parallel-motion linkage. In other embodiments, hitch device 122 may form other types of mechanical linkages.

Frame 280, in an embodiment, includes front end 300, rear end 302, right side 304, left side 306, first or right link 308, second or left link 310, cross member 312 and rear-end pivot-shaft receiver 314. Right link 308 is positioned opposite left link 310, with cross member 312 connecting the two links. Each link 308, 310 extends in a front-to-rear direction, and in an embodiment, includes a plurality of bends, such that a left-to-right width of front end 300 is greater than a left-to-right width of rear end 302.

Cross member 312 includes one or more actuator-rod-connector portions 313, including 313a and 313b, as depicted (one for each actuator rod).

Rear-end pivot-shaft receiver 314, when present, may comprise a cylindrical tube extending from right link 308 to left link 310 toward a rear end of frame 280. As explained further below, rear-end pivot-shaft receiver 314 is configured to receive a pivot shaft of coupling portion 282.

Rear end 302 of frame 280 is pivotally coupled to hitch-vehicle coupling portion 282 at fixed pivot joints 292a and 292b. Front end 300 of frame 280 is pivotally connected to lower end 340 hitch-implement coupling portion 298 at moving pivot joints 294a and 294b.

Coupling portion 282 may comprise any of a variety of mechanical structures for coupling or connecting hitch device 122 to hitch mount 200. In the depicted embodiment, coupling portion 282 includes first or right portion 282a and second or left portion 282b. Right coupling portion 282a includes a substantially flat or planar plate or plate-like main portion 318a with a connecting tab 320a. Similarly, left coupling portion 282b, located opposite to right coupling portion 282a, includes a substantially flat or planar plate or plate-like main portion 318b with a connecting tab 320b. Main portions 318a and 318b connect directly or indirectly to actuators 184a and 184b to secure and support the actuators.

Coupling portion 282 also includes pivot shaft 322 configured to be received by rear-end pivot-shaft receiver 314, and extending between right coupling portion 282a and left coupling portion 282b, and connecting bar 324, also extending between right coupling portion 282a and left coupling portion 282b.

In an embodiment, connecting bar 324 includes first or right end 328 that extends rightwardly away from a surface of main portion 318a of right coupling portion 282a, and second or left end 330 that extends leftwardly away from a surface of main portion 318b of left coupling portion 282. As described further below, ends 328 and 330 are configured to be received by hitch mount 200 for coupling hitch device 122 to hitch mount 200.

In other embodiments, rather than including a connecting bar 326 with protruding ends 328 and 330, each coupling portion 282a and 282b may include protrusions projecting from each of coupling portions configured to be received by hitch mount 200 for coupling a lower portion of hitch device 122 to hitch mount 200.

Each coupling portion 282a and 282b defines a plurality of apertures, including apertures 332a and 332b at connecting tabs 320a and 320b, respectively, for receiving pins 216 and 218 when coupling hitch device 122 to hitch mount 200. Each coupling portion 282a and 282b may also include apertures aligned with rear-end pivot shaft receiver 214 for receiving pivot shaft 322, and apertures for receiving ends 328 and 330 of connecting bar 326.

Hitch-implement coupling portion 298 includes top end 340, bottom end 342, right member 344 and left member 346. In an embodiment, and as depicted, hitch-implement coupling portion 298 forms in inverted "V" shape, with right member 344 connecting to left member 346 at an apex of top end 340. In an embodiment, right member 344 and left member 346 form an angle α where joined that is in a range of 20° to 60°. In other embodiments, hitch-implement coupling portion 298 may form other shapes, such as a triangle shape or other shapes. As described further below, forming an inverted V or triangle with an apex at top end 340 facilitates simple, and in some cases, tool-less coupling to implement 124.

Top end 340 includes connecting portion 348 that connects to an end of telescoping rod 286 and forms pivot joint 296.

Each of right and left members 344 and 346 may comprise bars extending in a top-to-bottom direction. In an embodiment, respective ends of right and left members 344 and 346 include an attached wheel 350. Wheels 350, when present, allow bottom end 342 to travel along the ground, which may be helpful when aligning and coupling to an implement 124, as well as during use of some implements 124.

Hitch device 122 may include a pair of actuators 150, such as 150a and 150b, as depicted, or in other embodiments may include a single actuator 150, or more than two actuators 150, depending on various application factors, including actuator size, actuator capacity, implement weight, and so on. Actuators 150 may comprise electrical actuators, as depicted, though in other embodiments, actuators 150 may comprise hydraulic actuators. Actuators 150, in an embodiment, and as depicted, comprise linear-motion actuators.

Right actuator 150a includes an electric motor and gearbox in motor housing 352a, rod 354a and electrical connectors 356a. Similarly, when present, left actuator 150b includes an electric motor and gearbox in motor housing 352b, rod 354b and electrical connectors 356b. Ends of rods 354a and 354 are connected respectively to actuator-rod-connector portions 313a and 313b of cross member 312 of frame 280.

Telescoping rod 286 is connected to cross member 288 via actuator retain-support portions 290, and is configured to extend and retract, varying its overall length as hitch-implement coupling portion 298 is raised and lowered.

Cross member 288 extends between coupling portions 282a and 282b, providing structural support for the device.

Referring also to FIGS. 3-6, hitch device 122, as described above, also includes an electrical interface, which may comprise a portion of wiring harness 140, and may include wires, connectors, and so on, for power distribution and communications.

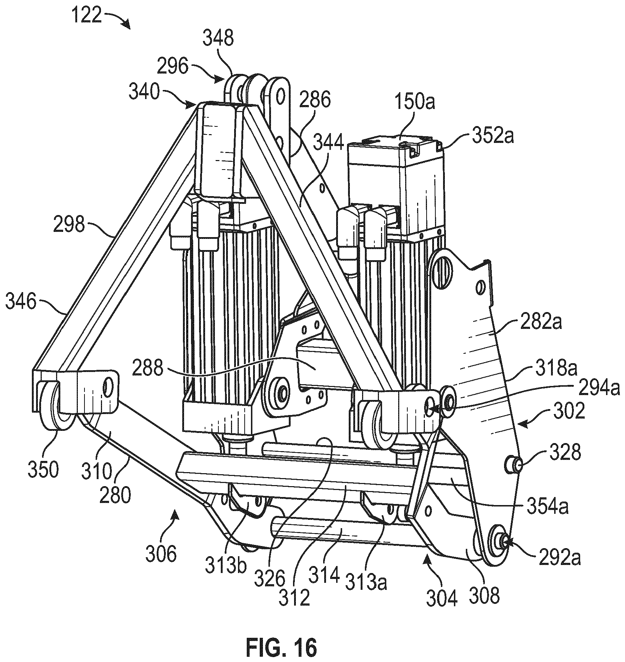

During upward operation of hitch device 122 resulting in an upward movement of hitch-implement coupling portion 298, which will be described in further detail below with respect to overall operation of hitch-implement system 120, power is received at actuators 150, causing ends of actuator rods 354a and 354b to retract, or move linearly upwardly. Actuator rods 354a and 354b apply an upward pulling force on frame 280, which pivots about pivot joints 292a and 292b, causing front end 342 of frame 280 to move upwardly. Hitch-implement coupling portion 298 moves upwardly, pivoting about pivoting joints 294a, 294b and 296. Telescoping rod 286 pivots upwardly about fixed pivot joint 297, with a front end of telescoping rod 286 pivoting with top end 340 of hitch-element coupling portion 298 at moving pivot joint 296. As such, hitch-element coupling portion 298 is raised upwardly. FIGS. 16 and 21 depict hitch device 122 in a raised position.

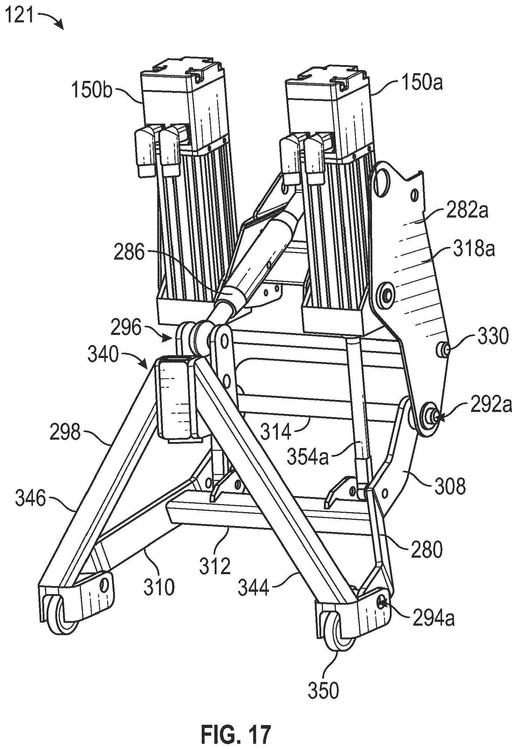

During downward operation of hitch device 122 resulting in a downward movement of hitch-implement coupling portion 298, which will be described in further detail below with respect to overall operation of hitch-implement system 120, power is received at actuators 150, causing ends of actuator rods 354a and 354b to extend, or move linearly downwardly. Actuator rods 354a and 354b apply a downward force on frame 280, which pivots about pivot joints 292a and 292b, causing front end 342 of frame 280 to move downwardly. Hitch-implement coupling portion 298 moves downwardly, pivoting about pivoting joints 294a, 294b and 296. Telescoping rod 286 pivots downwardly about fixed pivot joint 297, with a front end of telescoping rod 286 pivoting with top end 340 of hitch-element coupling portion 298 at moving pivot joint 296. As such, hitch-element coupling portion 298 is lowered downwardly. FIGS. 17 and 22 depict hitch device 122 in a lowered position.

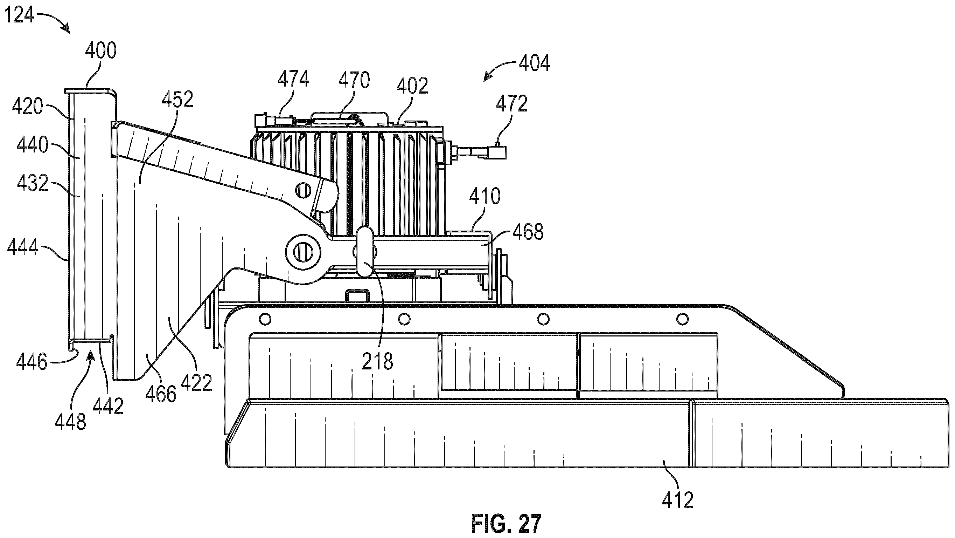

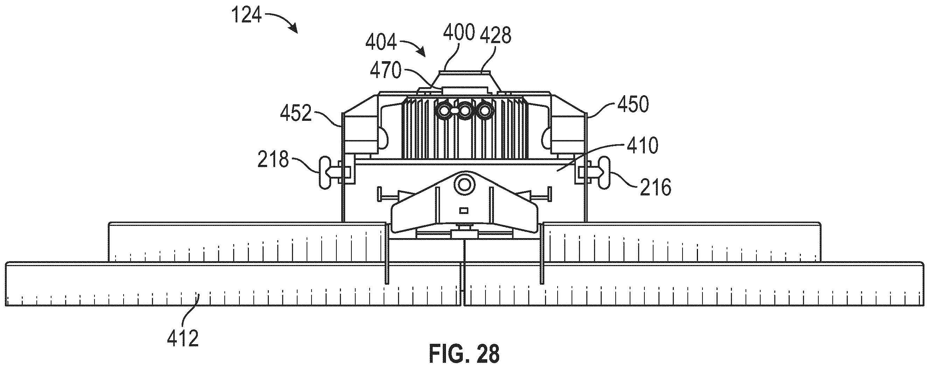

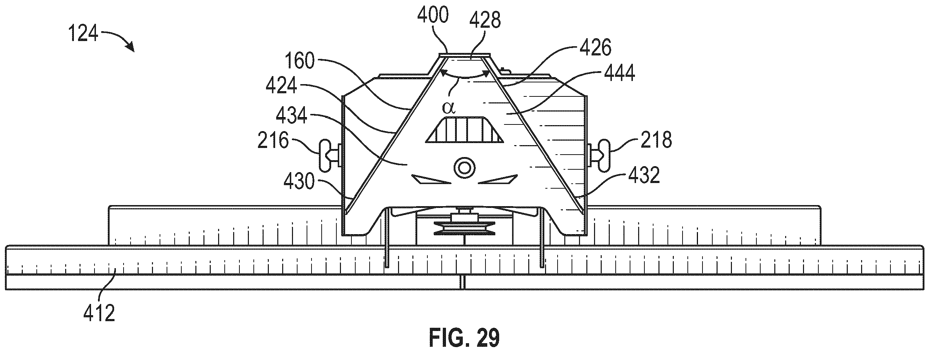

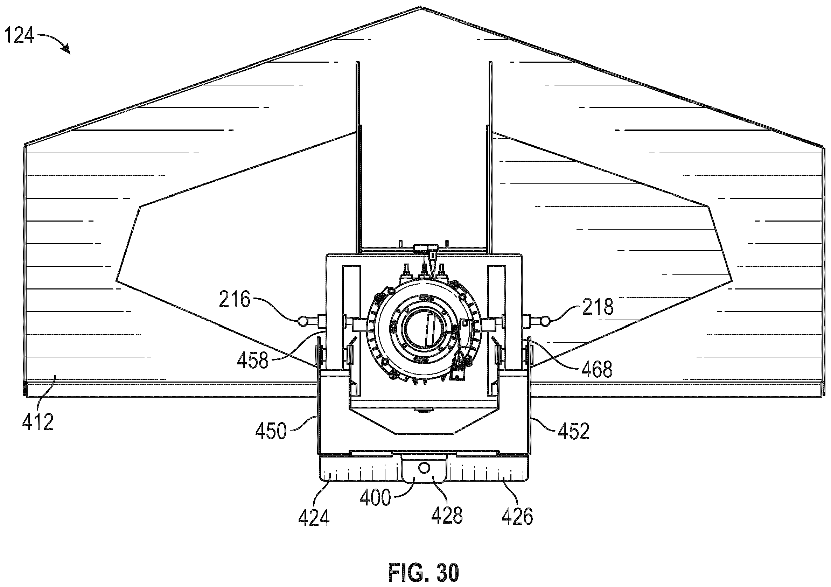

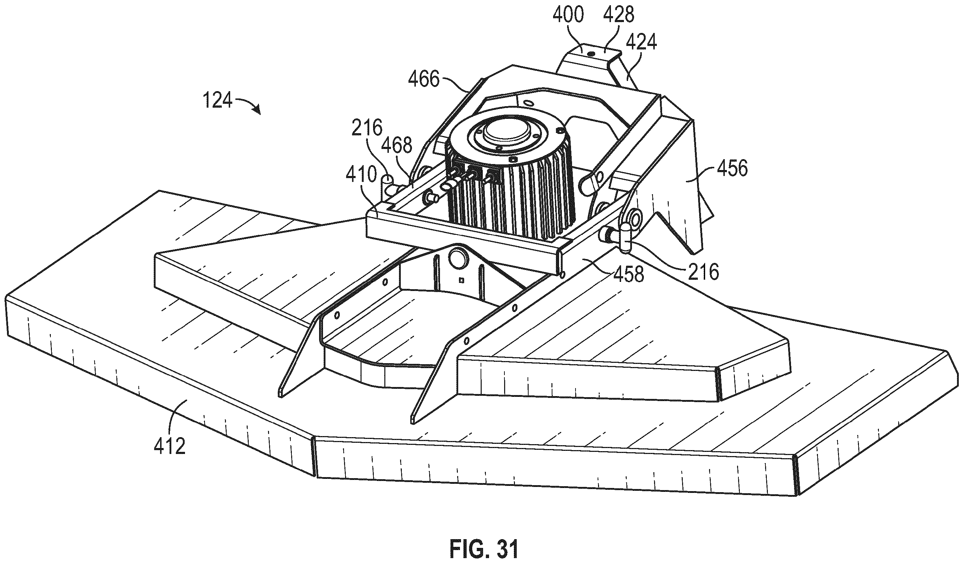

Referring to FIGS. 26-31, an embodiment of an implement 124 is depicted. In this particular embodiment, implement 124 includes an electrically-powered motor. However, as described above, embodiments of implement 124 that are configured to connect to hitch device 122 are numerous, and include, but are not limited to a snow blower, plow, rotary broom, bucket, rake, harrow, and other such implements. In an embodiment, implement 124 includes an electromechanical device, such as electric motor, an electric actuator, or both. Referring also to FIGS. 3-6, implement 124 may include an electrical interface, which may comprise a portion of wiring harness 140, and may include wires, connectors, and so on, for power distribution and communications.

In an embodiment, implement 124 includes implement-hitch coupling portion 400, implement electric motor assembly 160 and mechanical implementation portion 404 with motor interface 408 and coupling portion 410. In the depicted embodiment, mechanical implementation portion 404 comprises a mower assembly that includes mower deck 412 and mower blades (not depicted). As described further below, implement 124 may also include RFID tag 165 located on mechanical implementation portion 404 to be read by RFID reader/writer 163 located on electric motor assembly 160.

In an embodiment, and as depicted, implement-hitch coupling portion 400 is formed as a structure complementary to hitch-implement coupling portion 298 (see also FIG. 18), and is configured to easily and quickly receive hitch-implement coupling portion 298 and detachably couple to hitch device 122 without the use of tools and in a self-centering or self-aligning manner. In this embodiment, implement-hitch coupling portion 400 includes receiver 420 for receiving hitch-implement coupling portion 298 and connecting base 422.

Receiver 420, in an embodiment, comprises an inverted "V" shape that includes first or right member 424 and second or left member 426. Right member 424 is connected to left member 426 at an apex of top end 428. In an embodiment, right member 424 and left member 426 form an angle α where joined that is in a range of 20° to 60°. In other embodiments, receiver 420 may form other shapes, such as a triangle shape or other shapes complementary to, and configured to receive, hitch-implement coupling portion 298.

In an embodiment, right member 424 forms an L shape, and comprises first side 430 with inner receiving surface 432 and second side 434 with inner receiving surface 436. Second side 434 extends transversely away from an edge of first side 430. Together, first side 430 and second side 434 define first or right hitch-receiving channel 438. When coupled to hitch-implement coupling portion 298, right member 344 of hitch-implement coupling portion 298 is received into right hitch-receiving channel 438, and inner receiving surfaces 432 and 436 may abut portions of outer surfaces of right member 344.

In an embodiment, left member 426 forms an L shape, and comprises first side 440 inner receiving surface 442 and second side 444 with inner receiving surface 446. Second side 444 extends transversely away from an edge of first side 440. Together, first side 440 and second side 444 define second or left hitch-receiving channel 448. When coupled to hitch-implement coupling portion 298, left member 346 of hitch-implement coupling portion 298 is received into right hitch-receiving channel 448, and inner receiving surfaces 442 and 446 may abut portions of outer surfaces of left member 344.

Connecting base 422, in the embodiment depicted, comprises first or right portion 450, second or left portion 452 and main portion 454.

Right portion 450 includes base portion 456 and arm portion 458. Base portion 456, in an embodiment forms a generally flat, plate-like structure extending transversely from a right side of main portion 454. Arm portion 458 is connected to, or integral with base portion 456 and extends in a front-to-rear direction away from base portion 456. Arm portion 458 may be pivotally connected to base portion 456 so as to allow implementation portion 404 to pivot about base portion 456 and hence pivot about hitch device 122 when connected. In an embodiment, arm portion 458 defines a lengthwise channel for receiving part of connecting portion 410 of implementation portion 404 to connect arm portion 458 to implementation portion 404. In an embodiment, right base portion 450 may also include a pin 216 for connecting arm portion 458 to implement portion 404.

Left portion 452 includes base portion 466 and arm portion 468. Base portion 466, in an embodiment forms a generally flat, plate-like structure extending transversely from a left side of main portion 454. Arm portion 468 is connected to, or integral with base portion 466 and extends in a front-to-rear direction away from base portion 466. Arm portion 468 may be pivotally connected to base portion 466 so as to allow implementation portion 404 to pivot about base portion 466 and hence pivot about hitch device 122 when connected In an embodiment, arm portion 468 defines a lengthwise channel for receiving part of connecting portion 410 of implementation portion 404 to connect arm portion 468 to implementation portion 404. In an embodiment, left portion 452 may also include a pin 218 for connecting arm portion 458 to implement portion 404.

Implement electric motor assembly 160, in an embodiment, includes electrically-powered motor 470, mechanical interface 472 and electrical interface 474. Electrically-powered motor 470 may comprise any of a variety of electrically-powered motors for driving mechanical components and structures of mechanical implementation portion 404, such as mower blades in this embodiment, or such as rotary brooms, snowblower impellers and augers, and so on. Electrically-powered motor 470 may comprise various electrical characteristics, AC or DC, single-phase or three-phase windings, and so on, with varying degrees of horsepower and torque, depending on the application or mechanical implementation portion 404.

The use of a dedicated electric implement motor assembly 160 for implement 124, rather than relying on power from the vehicle engine, facilitates the use of relatively higher-power motors. In an embodiment, implement motor assembly 160 power is in a range of 5hp to 60hp.

The use of an electric motor assembly 160, as compared to the use of a comparable dedicated internal-combustion engine, results in an ease of maintenance. Further, in some instances, because a traditional implement is raised and lowered by an attached winch, not required for embodiments described herein, an overall weight savings for implement 124 is possible.

In an embodiment, implement electric motor assembly 160 may also include RFID tag 165. In such an embodiment, RFID tag 165 may include information relating to implement 124, such as implement specifications, required motor type, and so on, as also described further below. RFIG tag 165 may be read by RFID reader/writer 163, which may be located on electric motor assembly 160.. In an embodiment, RFID reader/writer 163 may be located on a downward-facing portion of motor assembly 160 so as to be read an upward-facing RFID tag 165 on mechanical implementation portion 404.

Mechanical interface 472 connects electrically-powered motor 470 to implementation portion 404 at motor interface 408. In an embodiment, mechanical interface 472 of implement electric motor assembly 160 may comprise means for detachably coupling motor 470 to mechanical interface 408 of implementation portion 404, such as structure for rotational, snap-fit, clamping and other means for detachably coupling implement electric motor assembly 160 to implementation portion 404. In one embodiment, mechanical interface 472 acts as a key fitting into a keyway formed of mechanical interface 408 of implementation portion 404.

Electrical interface 472 may comprise a plurality of wires or cables and electrical connectors configured for mechanical and electrical connection to hitch device 122 or to wiring harness 140. Electrical interface 472 may be configured to receive electrical power for operating motor 470 and in some embodiments, receiving communication or control signals from hitch device 122 or powersports vehicle 100.

As described above, implement electric motor assembly 160 may be detachably connected to implementation portion 404. This facilitates the removal of implement electric motor assembly 160 for service or replacement. Such a configuration also facilitates the use of one particular implement electric motor assembly 160 for use on multiple implements. For example, implement electric motor assembly 160 may be used to power a mower 124 in the summer, then moved to a snow blower 124 in the winter. The use of RFID reader/writer 163 reading RFID tag 165 may ensure that an appropriate motor 160 is used with the implement 124, as explained further below.

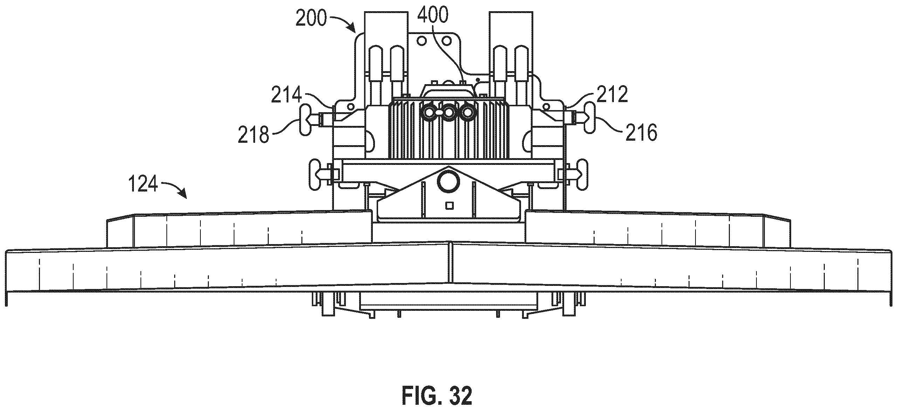

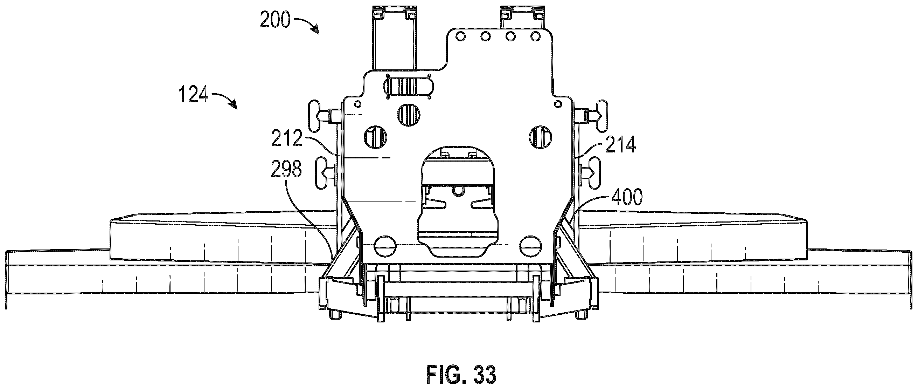

Referring to FIGS. 32 and 33, implement 124 coupled to hitch device 122, coupled to hitch mount 200 is depicted. FIG. 32 is a front view of the coupled devices, while FIG. 33 is a rear view of the coupled devices.

As described above in the various figures, hitch mount 200 is mounted to powersports vehicle 100. First and second coupling portions 212 and 214 project away from main portion 210, and connect to hitch-vehicle coupling portion 282, secured with pins 216 and 218, thereby detachably connecting hitch device 122 to hitch mount 200. Hitch-implement coupling portion 298 is received by implement-hitch coupling portion 400 of implement 124, thereby detachably connecting implement 124 to hitch device 122.

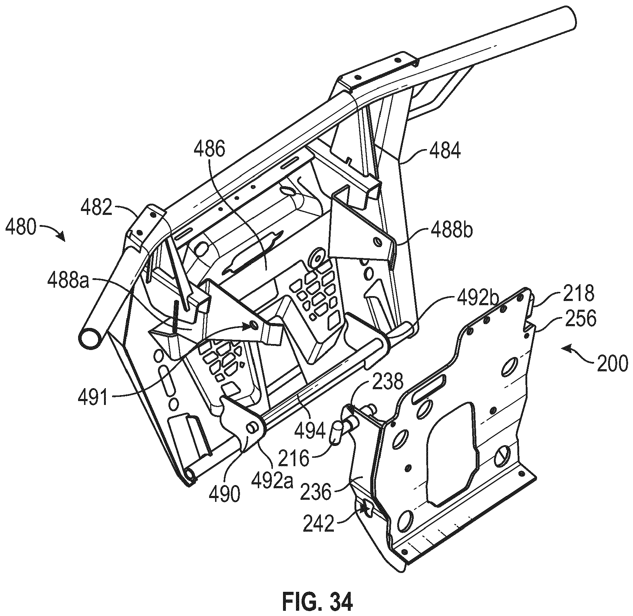

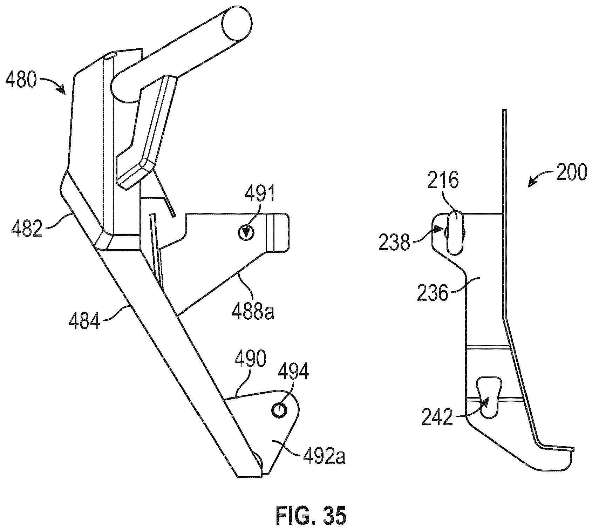

Referring to FIGS. 34 and 35, hitch mount 200 and bumper assembly 480 of powersports vehicle 100 are depicted adjacent to one another. FIG. 34 provides a perspective view of hitch mount 200 and bumper assembly 480, while FIG. 35 provides a right-side view.

As described above, hitch mount 200 is configured to mount to powersports vehicle 100, and to also receive hitch device 122. In an embodiment, hitch mount 200 may also be configured to detachably receive and connect to bumper assembly 480. In such an embodiment, a user may choose to permanently or semi-permanently couple hitch mount 200 to powersports vehicle 100, then selectively couple bumper assembly 480 to hitch mount 200, or hitch device 122. As such, the user may keep powersports vehicle 100 in a non-implement mode, with hitch mount 200 covered by bumper assembly 480.

In an embodiment, bumper assembly 480 easily and detachably couples to hitch mount 200 in substantially the same way as hitch device 122 couples to hitch mount 200. In the depicted embodiment, bumper assembly 480 includes bumper portion 482 with front panel 484 and cross bar 486, upper bumper coupling portion 488 (488a, 488b) and lower bumper coupling portion 490.

Upper bumper coupling portion 488, in this embodiment, includes a pair of projecting structures 488a and 488b, that in an embodiment are plate-like structures that may include bends as depicted. Each coupling portion 488a and 488b defines a pin receiving aperture 491 configured to receive one of pin 216 or pin 218.

Lower bumper coupling portion 490 includes a pair of connecting-bar support portions 492a and 492b projecting away and rearwardly from front panel 484, as well as connecting bar 494. Connecting bar 494 extends in a left-to-right direction between connecting-bar support portions 492a and 492b and is supported by connecting-bar support portions 492a and 492b.

When bumper assembly 480 is coupled to hitch mount 200, upper bumper coupling portion 488a is aligned with, and overlaps, right-side top portion 236 of hitch mount 200, such that apertures 491 and 238 are aligned. Pin 216 is inserted through the apertures 491 and 238, thereby connecting upper bumper coupling portion 488a and top portion 236 of hitch mount 200. Similarly, upper bumper coupling portion 488b is aligned with, and overlaps, left-side top portion 256 of hitch mount 200, such that apertures 491 and 258 are aligned. Pin 218 is inserted through the apertures 491 and 258, thereby connecting upper bumper coupling portion 488b and top portion 256 of hitch mount 200.

Lower bumper coupling portion 490 couples with hitch mount 200 when ends of connecting bar 494 are received into slots 242 and 262 of hitch mount 200.

In an embodiment, a user firstly connects lower bumper coupling portion 490 by inserting ends of connecting bar 494 into top portions of slots 242 and 262, followed by lower the ends into a lower portion of slots 242 and 262 to secure lower bumper coupling portion 490 to hitch mount 200. Next, bumper assembly 480 is pivoted about connecting bar 494 to align upper bumper coupling portions 488a and 488b with top portions 236 and 256 of hitch mount 200, followed by pins 216 and 218 being inserted through upper bumper coupling portions 488a and 488b and top portions 236 and 256.

A method for coupling hitch device 122 to hitch mount 200 is substantially the same as the method of coupling bumper assembly 480 to hitch mount 200 as described immediately above.

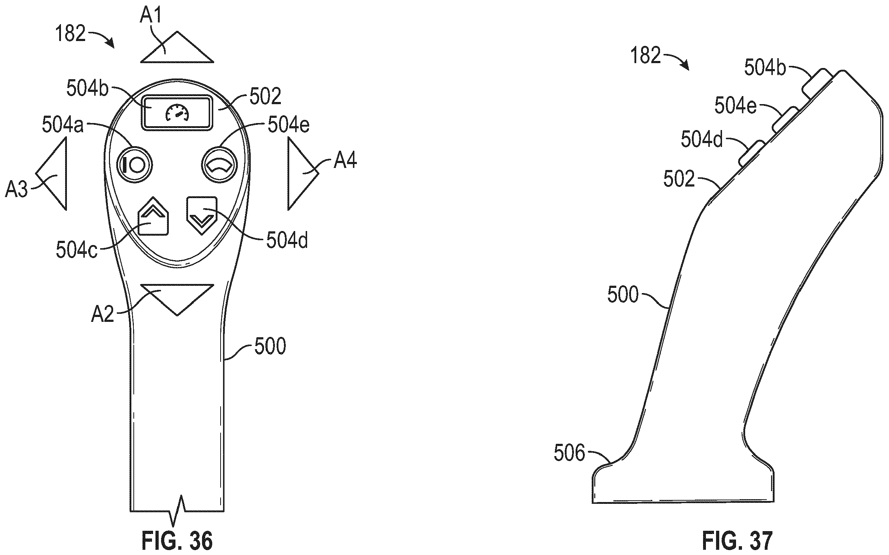

Referring to FIGS. 36 and 37, an embodiment of an input device 182 for controlling operation of hitch device 122 and/or implement 124, as well as some functions of powersports vehicle 100, is depicted. In this embodiment input device 182 is a pivoting joystick controller 182. FIG. 36 is a front view of joystick 182, while FIG. 37 is a right-side view of joystick 182. In this embodiment, joystick 182 includes a graspable portion 500, which may also be referred to as a "stick", controls face 502 and a plurality of input buttons 504, including input buttons 504a, 504b, 504c, 504d and 504e.

Graspable portion 500 is configured to be grasped by the hand of a user or operator of powersports vehicle 100, with controls face 502 facing in an upward and front-to-rear direction for easy viewing by the user.

Input buttons 504 may comprise a variety of types of physical or graphical buttons, such as power button 504a for turning power to implement 124 on and off, speed control button 504b for controlling a motor speed or rotary device speed of implement 124, hitch raise and lower buttons 504c and 504d for raising and lowering hitch device 122, and vehicle function button 504e, which in an embodiment selectively controls any of various powersports vehicle 100, such as windshield wiper motion. Joystick 182 may include more or fewer control buttons depending on features of impellent 124 and powersports vehicle 100, and other considerations.

In an embodiment, joystick 182 pivots around base portion 506 of graspable portion 500. Pivoting motion of joystick 182 may be used to control operation of powersports vehicle 100 and/or hitch system 120. Arrows A1, A2, A3 and A4 indicate an available pivot-movement direction of joystick 182. In an embodiment, pivoting movements of joystick 182 result in movement of hitch device 122 and/or implement 124. In one such embodiment, movement of joystick 182 in direction A1 lowers hitch device 122 and attached implement 124; movement of joystick 182 in direction A2 raises hitch device 122 and attached implement 124; movement in direction A3 turns or rotates implement 124 leftwardly (if implement 124 is configured for such rotation); and movement of joystick 182 in direction A4 turns or rotates implement 124 rightwardly.

Many configurations for controlling hitch device 122 and implement 124 with various joystick 182 buttons and movements are possible, such that the examples described above are not intended to be limiting.

Joystick 182 may generally be located within an interior of powersports vehicle 100, including being located on a dashboard, center console, or in a unique embodiment as described below, in a pivoting armrest.

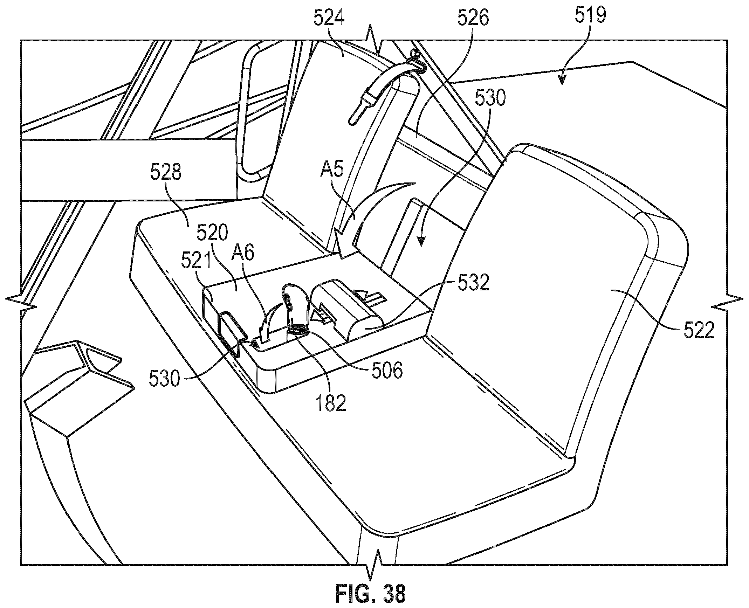

Referring to FIG. 38, in an embodiment, powersports vehicle 100 includes seating assembly 519 that includes armrest 520, operator-side seat 522, passenger-side seat 524, center-back support portion 526 and center seat portion 528. In an embodiment, seat assembly and center-back supporting portion 526 defines recess 530 configured to receive a portion of armrest 520 when armrest 520 is in an upright or stowed position.

Armrest 520 is located between operator-side seat 522 and passenger-side seat 524, and as indicated by arrow A5, is pivotable between an upright or stowed position (not depicted) and a lowered or use position (depicted).

In an embodiment, armrest 520 includes main portion 521 defining joystick-receiving recess 530 and slidable wrist-rest 532. Joystick 182 is pivotally connected at its base portion 506 to main portion 521 of armrest 520, and may be pivoted between a use position with joystick 182 in an upright position (depicted) and a stowed position (not depicted). In the stowed position, joystick 182 is pivoted downward and received into joystick-receiving recess 530. Arrow A6 indicates a pivoting direction of joystick 182

Optional wrist rest 532 is connected to, and in some embodiments, slidably connected, to main portion 521. Wrist rest 532 projects upward and away from main portion 521 to provide a convenient and ergonomic support structure for an operator's wrist or arm. Further, wrist rest 532, in a slidable embodiment, is configured to moved forward or rearward by a user so as to achieve a comfortable and supportive position.

When completely stowed, joystick 182 is pivoted to the stowed position and received in joystick-receiving recess 530, armrest 520 is in an upright position, and wrist rest 532 is received into recess 530.

In a hard-wired embodiment of joystick 182, wires connecting joystick 182 to powersports vehicle 100 and its control system, may be hidden within main portion 521, and routed to other portions of powersports vehicle 100 for connection to implement controller 142.

The joystick-armrest embodiment for controlling hitch system 120 provides ergonomic and comfortable access to joystick 182, while protecting joystick 182 from inadvertent damage and misuse.

In addition to, or as a substitute for, joystick 182, a user interface 184, such as an in-vehicle infotainment (IVI) system with a display screen may be used. In such an embodiment, a display screen may display various graphical user interfaces with graphical icons and buttons. A user may select the various graphical buttons or interactive graphics to operate hitch system 120, with or without the use of joystick 182.

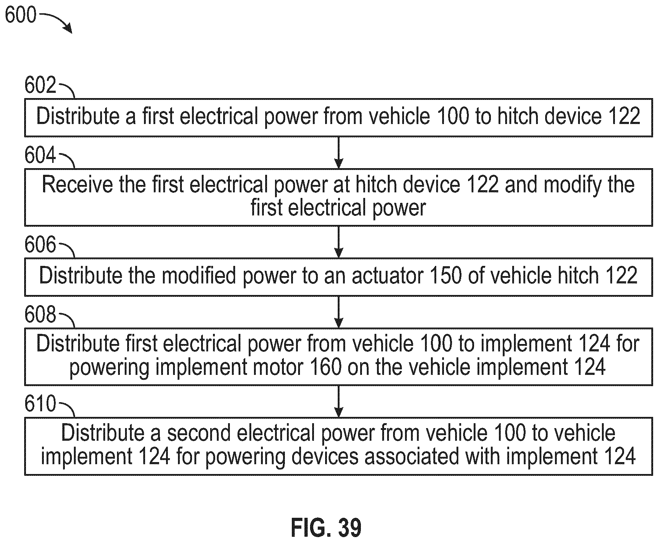

In addition to the various devices and systems described above, embodiments of the present disclosure also include multiple associated methods or processes, some of which have been described already to a certain extent above. Several methods are described in FIGS. 39-41.

Referring specifically to FIG. 39, method 600 for distributing electrical power to a hitch-implement system 120 is depicted.

At step 602, a first electrical power from powersports vehicle 100 is distributed to modular vehicle hitch device 122. As described above with respect to FIG. 3, the first electrical power may be provided by a vehicle battery, such as traction-motor battery 146 in the case of a BEV. In another embodiment, a vehicle battery 148 of an ICE powersports vehicle 100 may provide the first electrical power to the hitch device 122. In an embodiment, the first electrical power distributed from the powersports vehicle to the modular vehicle hitch comprises distributing DC power from a battery of the powersports vehicle to vehicle hitch 122 through a wiring harness and connector system.

In yet another embodiment, rather than receive the first electrical power from powersports vehicle 100, hitch device 122 may include a dedicated hitch-implement battery 188 (FIG. 5).

The first electrical power distributed to hitch device 122 may comprise a DC power with a voltage determined by the vehicle battery source. In a BEV embodiment, the first electrical power may be a 48VDC electrical power. In other embodiments, the first electrical power my be in a range of 12 VDC to 60VDC.

At step 604, the first electrical power received at vehicle hitch 122 may be modified to a voltage appropriate for hitch device 122. In a BEV embodiment, powersports vehicle 100 provides a relatively-high voltage from traction-motor battery 146, which then needs to be reduced by voltage converter 152 for use by hitch-lift actuators 150 (see also FIG. 3). In an embodiment, the voltage is reduced to 12VDC. In other embodiments, the received electrical power may be modified to provide an appropriate voltage for an optional portable power source, such as power source 154 at hitch implement 122. In one such embodiment, power source 154 receives and provides power with the same characteristics as received from voltage converter 152, e.g., 12VDC, though in other embodiments, the first electrical power may be modified to provide an AC power, such as 120VAC for powering external devices.

At step 606, the modified power of step 604 is distributed to an actuator 150 of vehicle hitch 122. As described above, such modified power may include 12VDC power, or another voltage power appropriate for actuators 150.

At step 608, the first electrical power from powersports vehicle 100 is also distributed to vehicle implement 124 for powering implement motor 160 on the vehicle implement 124. In a BEV embodiment, the first electrical power is provided by a battery of powersports vehicle 100, such as traction-motor battery 146. In an embodiment, the first power may be received at an inverter or controller inverter for powering implement motor 160.

At step 610, a second electrical power from powersports vehicle 100 to vehicle implement 124 for powering devices associated with the implement device. The second electrical power may be distributed from a power source of powersports vehicle 100 other than the power source providing the first electrical power, and may have characteristics that are different than the first electrical power. In one such embodiment, a battery other than traction-motor battery 146, such as vehicle battery 148 provides the second electrical power. For example, while traction-motor battery 146 may be a relatively-high voltage battery for power traction motor 143, vehicle battery 148 may be a lower-voltage battery, such as 12VDC or similar, for powering lower-voltage vehicle systems and accessories. Such power may be received by implement controller 142 and provided to actuators 164 of implement 124, as depicted in FIG. 3.

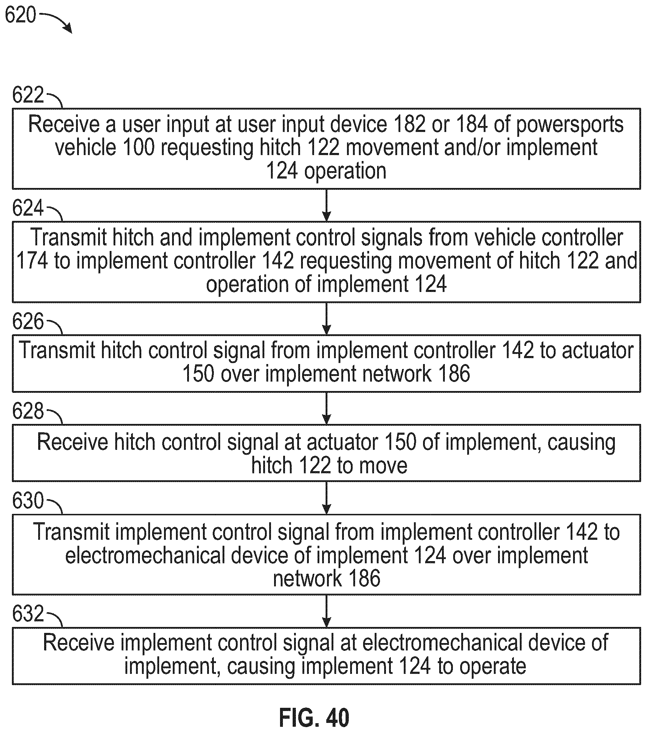

Referring to FIG. 40, and also to system FIG. 4, method 620 of controlling a modular vehicle hitch and implement for a powersports vehicle is depicted and described.

At step 622, a user input at a user input device 182 of powersports vehicle 100 requesting hitch 122 movement and/or implement 124 operation is received. The user input may be received from a user input device 182, such as joystick 182, or another input device, such as an IVI or other user input device 182 with a display screen. User inputs may be received over a wired or wireless network.

At step 624, after receiving the user input, hitch and implement control signals are transmitted from vehicle controller 174 to implement controller requesting movement of hitch device 122 and operation of implement 124. Transmission of hitch and implement control signals may be over wiring harness 140 and implement network 186.

At step 626, hitch control signals from implement controller 142 are transmitted to actuator 150 of hitch device 122 over implement network 186.

At step 628, the hitch control signal is received at actuator 150, causing hitch 122 to move.

At step 630, implement control signals are transmitted from implement controller 142 to electromechanical devices or inverter 162 of implement 124 over implement network 186.

At step 632, implement control signals are received at an electromechanical device of implement 124, such as implement inverter 162, implement motor 160 or an actuator (not depicted), causing implement 124 to operate. In an embodiment, operation of implement 124 includes causing an implement motor 160 to operate, such as by rotating a shaft with turns a rotating mechanism of implement 124, such as mower blades, a rotary broom, impellers, and so on. Operation of implement 124 may also include operating other electromechanical devices, such as actuators of implement 124, including actuators to move a plow blade angle, and other such non-rotary implement movements.

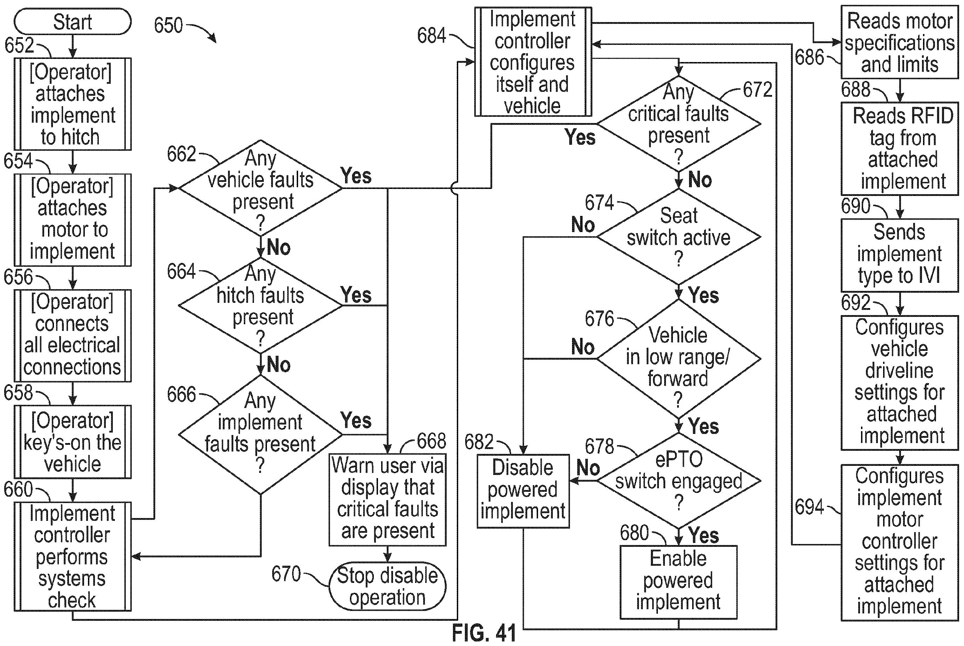

Referring to FIG. 41, a method 650 for operating a hitch-implement system is depicted.

At step 652, an operator attaches implement 124 to hitch device 122. In an embodiment, the operator has previously attached hitch device 122 to powersports vehicle 100, as described above. Implement 124 may be located on a ground plane with implement-hitch coupling portion 404 being accessible to hitch device 122. The operator moves powersports vehicle with attached hitch device 122 such that its hitch-implement coupling portion 298 is directly aligned beneath implement coupling portion 400. Hitch device 122 is then raised, causing hitch-implement coupling portion 298 to be received by implement-hitch coupling portion, thereby coupling implement 124 to hitch device 122. In other embodiments wherein an implement 124 is relatively small, it may be possible for implement 124 to be lifted and placed onto a stationary hitch device 122.

At step 654, the operator attaches implement motor assembly 160 to mechanical implement portion 404 of implement 124. As described above, motor assembly 160 may be detachably connected, such that an operator may use detachable motor assembly 160 on more than one implements 124.

At step 656, the operator makes the electrical connections from powersports vehicle 100 to hitch device 122 and implement 124. In an embodiment, the operator connects a portion of wiring harness 140 on powersports vehicle with another portion of wiring harness 140 on hitch device 122 and/or implement 124. The electrical connection(s) may be made by joining mating portions of electrical connectors of wiring harness 140.

At step 658, the operator, using the key, powers on powersports vehicle 100.

At step 660, systems of powersports vehicle 100, including ECU 174, perform a system check, as described at least in steps 662 to 670. Generally, the system checks for vehicle, hitch or implement faults that should be corrected prior to operating powersports vehicle 100 and hitch-implement system 120.

As part of the system check, powersports vehicle 100 with ECU 174 is configured to check for vehicle faults at step 662, to check for hitch faults at step 664, and to check for implement faults at step 666. If no faults are detected, then at step 684, implement controller 142 configures itself and powersports vehicle 100.

If a vehicle fault, hitch fault or implement fault is present per any of steps 662, 664 or 666, then at step 668, a warning is issued to the operator that a fault, which may include a critical fault, is detected, and powersports vehicle 100 operation is disabled at step 670.

At step 684, if faults were not detected or present at steps 662 to 666, then implement controller 142 configures itself and powersports vehicle 100, according to steps 686 to 694.

At step 686, implement controller 142 reads or otherwise determines implement motor assembly 160 specification and limits, and at step 688, RFID reader/writer 163 reads RFID tag 165 on implement 124. In an embodiment, when implement 124 is electrically connected to wiring harness 140 and implement controller 142, data from motor assembly 160 is made available to implement controller 142.

Data regarding the specification of motor assembly 160 and electrically-powered motor 470 informs implement controller 142 as to relevant motor-operating characteristics, such as motor speeds and torque envelope. As such, after reading RFID tag 165 on implement 124, implement controller 142 may determine whether the motor assembly 160 provided is appropriate for use with the particular implement 124. For example, a motor that is too small, or does not provide the necessary torque for implement 124 should not be used. Similarly, a larger capacity motor may present operational and safety concerns.

In the embodiment wherein motor assembly 160 is detachable, being able to compare motor characteristics with implement 124 requirements ensures proper and safe operation of implement 124, and provides other benefits. The use of RFID tag 165 and RFID reader/writer 163 is advantageous in part because such technology is relatively inexpensive, durable and does not require that an operator make any connections.

However, embodiments of the disclosure contemplate alternatives to RFID technology for matching motor assemblies 160 to implements 124. In an embodiment, an EEPROM chip may be used to store information regarding motor assembly 160, which can be read by implement controller 142. An EEPROM chip can store large amounts of data, including usage data, which may be beneficial not only for matching, but for collecting and storing historical use data. However, such an embodiment may require the operator to make an electrical connection between reader and chip, and may not be as robust as RFID technology.

In another embodiment, a resistor network may be used to confirm that motor assembly 160 is appropriate for use with implement 124. In such an embodiment, a user would likely have to make an electrical connection, or plug connectors together, and parameters would need to be stored in implement controller 142.

In yet another embodiment, a vehicle communication network, such as a LIN/CAN control module could be included with the implement to read and interpret motor data.

As described briefly above with respect to FIGS. 3 and 5, RFID tag 165, in an embodiment may be mounted to implement 124, such as on mechanical implementation portion 404, while RFID reader 163 is mounted on a face of motor assembly 160, such that when mounting motor assembly 160 implement 124, the motor face and reader/writer 163 are facing implement 124 and its RFID tag 165. Given that RFID tag 165 needs to be lined up with RFID reader/writer 163, in an embodiment, it is possible to position them such that they only line up when the motor is correctly mounted to the implement. This provides an additional safety measure, as implement controller can be configured to not allow motor assembly 160 to be powered or operational before RFID tag 165 is read.

In another embodiment, which may be used with or without the RFID matching configuration described above, includes placing RFID reader/writer 163 onto a face of hitch 122, such as on hitch-implement coupling portion 298, and placing RFID tag 165 onto implement-hitch coupling portion 404 of implement 124 such that when the coupling portions 298 and 400, and hence hitch device 122 and implement 124 are attached, RFID reader/writer 163 is able to read RFID tag 165. Such a configuration may be used to ensure that hitch device 122 is properly aligned with and connected to implement 124.

Further, such an embodiment may also be used to ensure that only implements 124 that are appropriate for hitch device 122 and/or powersports vehicle 100 are operational. For example, such a configuration could be used to prevent an extremely large and heavy implement 124 from being used with a relatively small powersports vehicle 100.

As discussed above, various information could be included in, and read from, and written to, RFID tag 165, including: implement type; minimum, maximum and nominal motor speed; minimum motor torque; ideal motor torque; maximum motor torque; maximum vehicle speed; vehicle pedal map; implement hours; implement serial number; and other such information.

With respect to implement type, in an embodiment, the information would inform a user interface, such as an IVI, to provide correct/appropriate implement instructions to the user, and to configure joystick 182 or other user interface buttons that are multi-purpose buttons.

With respect to motor speed, in an embodiment, the information may be used to set a desired motor speed for the attached implement 124, along with the minimum and maximum speed for user adjustment for advanced users to keep the motor within safe bounds to prevent implement damage.

With respect to motor torque, in an embodiment, the information may be used to prevent operation if the operator attaches a motor assembly 160 that is too small for implement 124. The information could also be used to prompt the operator that a motor assembly 160 that is attached to implement 124 would work, but that a larger-torque motor would be needed for peak performance. Likewise, motor torque could be limited to a safe level for high-torque motors so as to avoid implement damage.

With respect to maximum vehicle speed, in an embodiment, the information may be used to automatically set the maximum/ideal speed for powersports vehicle 100, such that the operator can just put their foot down and not need to worry about regulating speed.

With respect to a vehicle pedal map, in an embodiment, RFID tag 165 might include data to assist implement controller 142 and/or ECU 174 to map the acceleration pedal for specific use with the attached implement 124.

With respect to implement hours, in an embodiment, RFID reader/writer 163 on motor assembly 160 may update the hours at each shutdown, and then trigger service interval warnings via user interface 184, such as an IVI, or to push notifications on a remote computing device 183 over external network 185.

Further, when implement 124 is identifiable, such as through RFID tag 165 and reader/writer 163, implements that should not be operable when powersports vehicle 100 are moving in reverse can be identified, and implement 124 operation temporarily ceased. In an embodiment, power to motor assembly 160 may be automatically shut off when powersports vehicle 100 is put into a reverse gear either immediately, or after a certain time and/or distance. For example, shutting down power to a snowblower implement 124 when vehicle 100 is in reverse may prevent clogging of the snowblower.

At step 690, an implement type read from RFID tag 165 is communicated to powersports vehicle 100, including user interface 184 which may be an IVI. In an embodiment, as part of the configuration process, the IVI can configure itself to display telemetry of specific importance to the attached implement 124, along with automatically providing a pop-up message with a quick how-to guide on using impellent 124 and associated controls, such as controls of joystick 182.

At step 692, ECU 174 configures vehicle 100 driveline settings for the attached implement 124. In an embodiment, a vehicle control module, such as ECU 174 or similar, receives settings like maximum vehicle speed while implement 124 is attached or while running. For example, when attached, the speed of powersports vehicle 100 may be limited, such as when a very heavy implement 124 is attached to a front of the vehicle. However, when the implement is actually running/operating, vehicle speed may be further limited to an even lower speed. Similarly with a lowered speed limit, a vehicle pedal map may be readjusted to get full pedal resolution at the restricted, lower speed, so ideally, the operator can just depress the pedal fully to get an optimal usage of the attached implement 124.

At step 294, implement controller 142 configures implement motor assembly 160 controller settings for the particular attached implement 124. Different implements 124 may require different PID parameter tunings for things like the speed control loop, due to differing inertias and loads that the implement will see. Similarly, maximum torque and maximum speed are configured for the attached implement 124 to protect it from damage, as described above.

After configuration at step 684, at step 672, implement controller 142 makes a number of additional checks before allowing operation of implement 142.

At step 672, if any critical faults are present, warnings to an operator are issued at step 668, and implement 124 and/or vehicle 100 operation is disabled at step 670.

If no critical faults are present, at step 674, implement controller 142 checks if a seat switch is active, i.e., check for a seated operator. If no, then power to implement 124 is disabled.

If a seat switch is active, then at step 676, in an embodiment, a check is made to confirm that powersports vehicle 100 is in a low range or gear, and in forward (rather than reverse). Allowing operation only in a vehicle low range prevents belt spin-burn on CVT vehicles and prevents motor over heating on EV versions of powersports vehicles 100.

If powersports vehicle 100 is not in a low range, power to implement 124 is disabled; if yes, then in an embodiment, at step 678, an ePTO switch check is made at step 678.

An ePTO (electronic power-takeoff) switch, when present, is physical or graphical switch that is used to turn power to electrically-powered 124 on and off. If such a switch is turned off, it is assumed that an operator does not want implement 124 to be powered, so power to implement 124 is disabled. If ePTO switch is engaged at step 678, then at step 680, power to implement 124 is enabled.

Consequently, embodiments of the present disclosure address many of the shortcomings of known hitch and implement systems by providing convenient, modular hitch and implement devices and systems that conveniently and detachably connect to a variety of powersports vehicles.

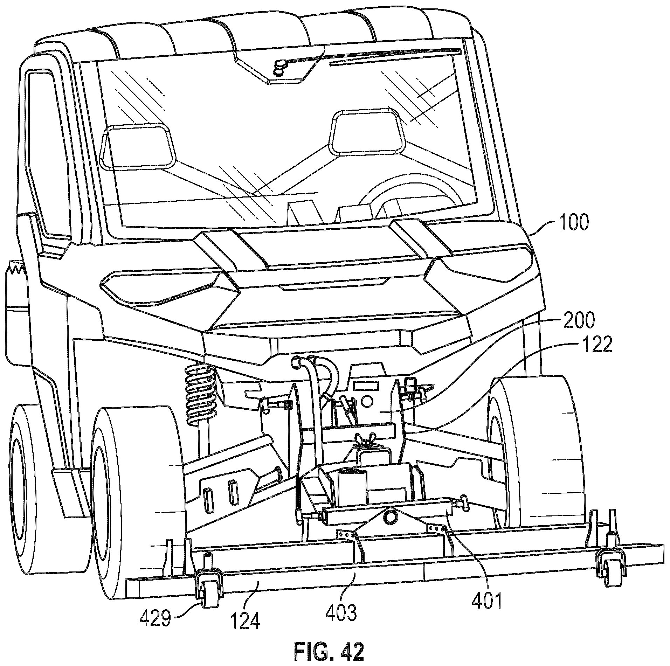

Referring now to FIGS. 2, and 42-44, hitch device 122 is configured to attach to powersports vehicle 100, and to connect to implement 124. Hitch device 122 may be configured to attached to powersports vehicle 100 front end 130 and/or rear end 132, as depicted in FIG. 2. FIGS. 42-45- illustrate a mower implement attached to the front of the powersports vehicle 100.

In an embodiment, a hitch device 122 is depicted attached to front end 130 and another hitch device 122 is depicted attached to rear end 132. However, it will be understood that system 120 may include one or more hitch devices 122 and one or more implements 124.

In embodiments, and as described further below, hitch device 122 is configured to move up and down relative to a ground plane or surface on which vehicle 100 rests, which in turn raises and lowers attached implement 124. In other embodiments, other degrees of freedom and movement are contemplated.

Implement 124 may comprise any of a variety of electromechanical devices or implements with an electric implement motor assembly and/or actuator for performing tasks in combination with powersports vehicle 100, including for snow removal, driveway cleaning, landscaping, agriculture, and so on. Examples of implements 124 include a mower, snowblower, plow, rotary broom, bucket, rake, harrow, brush mower, wood chipper, power grader, box scraper, post driver, soil conditioner, landscape rake, spreader, sprayer, power washer, auger, brush cutter, log splitter, vacuum collector, disc plow, tiller, trimmer mower, pallet forks, debris blower, cultivator, and planter, and so on. In some embodiments, and as described further below, implement 124 may include an actuator for positioning implement 124 in relation to hitch device 122 and/or an electric motor for performing implement functions, such as rotating a mower blade, impeller or rotary broom.

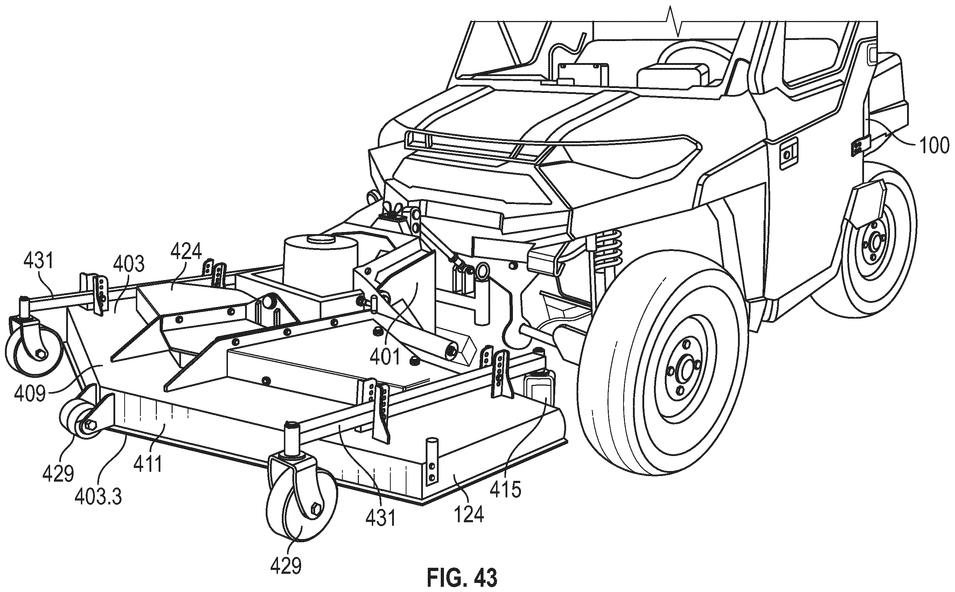

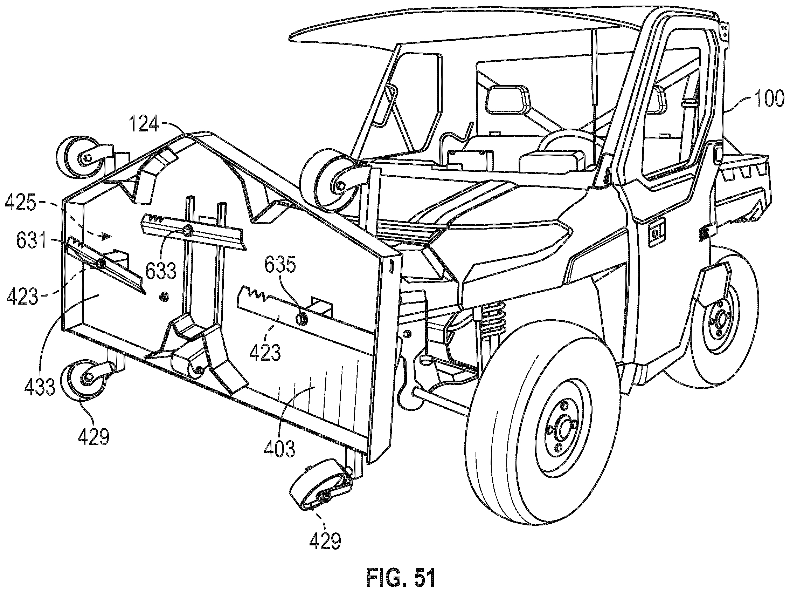

Referring to FIGS. 42, 43, and 51, the powersports vehicle 100 is illustrated with a mower implement 124 having a mower deck 403 supported by a suspension system 401 and hitched to the vehicle at the hitch device 122. FIG. 42 illustrates the vehicle with mower implement in process of mowing with mower implement following the ground terrain 404 ahead of the vehicle. FIG. 43 illustrates the vehicle with the hitch device raised elevating the mower implement off of the ground or floor surface 404. FIG. 51 illustrates the vehicle 100 with the mower implement 124 elevated and rotated rearwardly for inspection, maintenance or storage, for example.

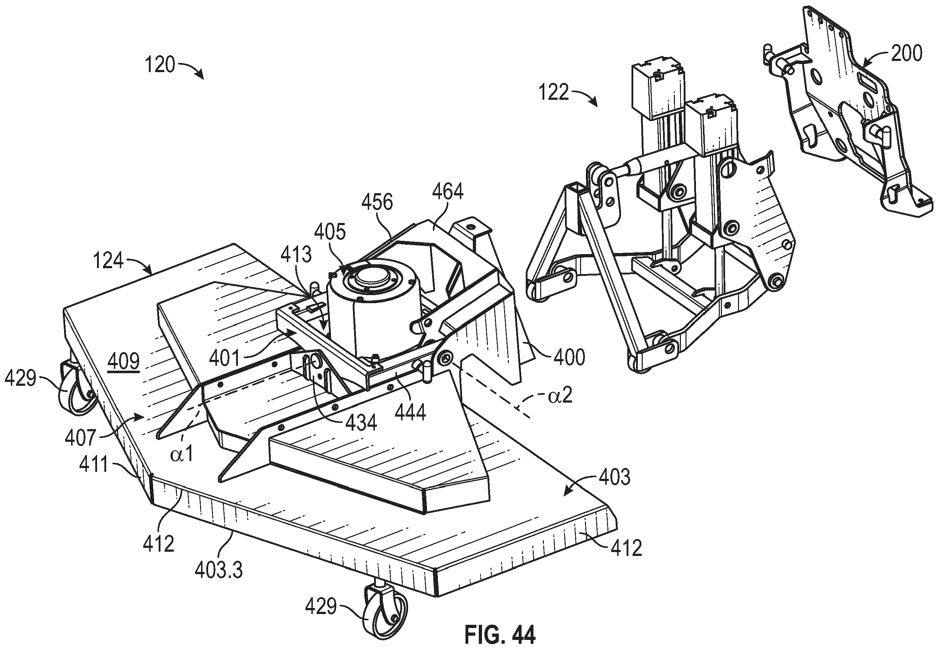

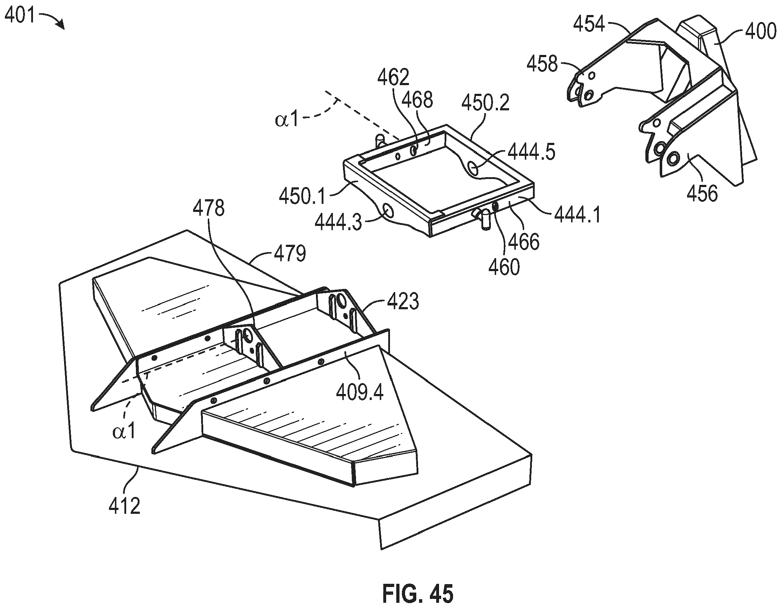

FIG. 44, depicts the mower implement 124 separated from the hitch device 122 and hitch mount 200 removed from the vehicle. The mower implement 124 has hitch-coupling portion 400, a support assembly configured as a suspension assembly 401, mower deck 403 and modular electric motor unit 405. Implement hitch-coupling portion 400, configured as a female A-frame hitch, is positioned at a rearward end of suspension assembly 401 and is configured to connect to hitch device 122 at a male A-frame hitch portion 123, which may be connected to hitch mount 200 on powersports vehicle 100. FIG. 45 depicts an exploded view of the suspension assembly 401.

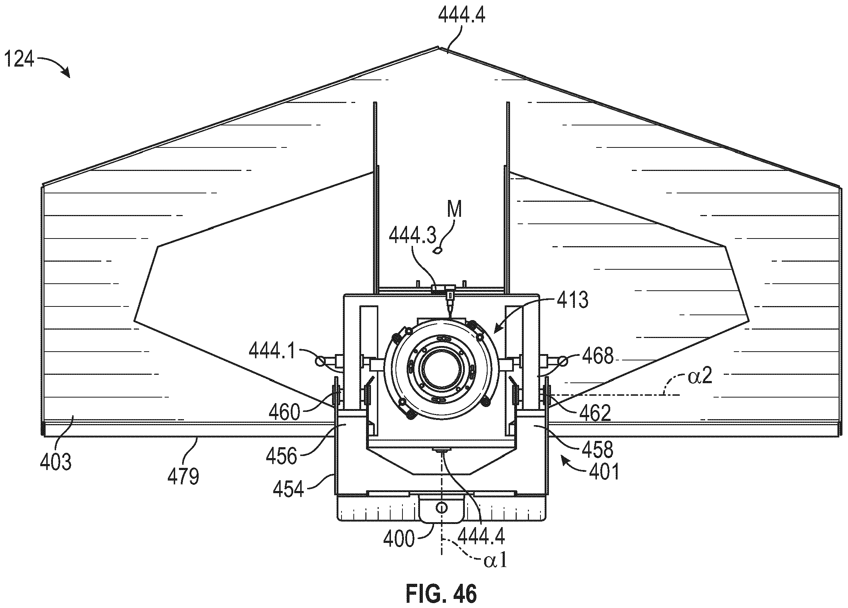

Referring to FIGS. 43-51, further details and components of a mower implement 124 embodiment are depicted.

Mower deck 403 has a deck housing 407 with an upper plate portion 409 and downwardly extending skirt portion 411 at an outer periphery 412 of mower deck housing 407. A motor receiving region 413 is positioned on and above a raised platform 416. Pulley system 418, discussed in more detail below, is positioned above and on the upper plate portion 409 and power the three mower blades 423 positioned in a cutting region 425 defined as the region below the upper plate portion 409 and within the skirt portion 411, when the deck is lowered to the ground and operational. A removable cover 424 or covers may be attached over the pully system 418.

A plurality of ground engaging wheels 429 may be supported by outrigger members 431 secured to the upper plate portion and are positioned about the outer periphery of mower deck housing 407. The wheels 429 may be configured as castors that are swivelable about a vertical axis. In embodiments, the wheels carry a significant portion or substantially all of the weight of the mower deck during mowing. In embodiments, the mower deck housing may not be supported by wheels and may be supported entirely by the powered sports vehicle, for example in a brush mower implement.

Suspension assembly 401 is mounted to and extends upwardly from mower deck 403. The suspension assembly, in embodiments, comprises a pair of pivot supports 423, 478 attached such as by welding to the upper plate portion 409, or ribs 409.4 on the upper plate portion, with a first lower pivot support 423 positioned rearwardly proximate the rearward margin 479 of the mower deck and a second lower pivot support 478 positioned forward of the first pivot support but rearward of a midpoint M of the forward rearward length of the mower deck. An intermediate support frame 444.1 configured as a closed loop, for example a rectangular shape, is pivotally connected at the lower pivot supports 423, 478 at a forward portion 450.1 and a rearward portion 450.2 of the intermediate support frame 444.1 with forward and rearward pivot connections 444.3, 444.5 such that the intermediate support partially rotates about a forward rearward axis α1. In embodiments, the range of rotation of the intermediate support frame may be in the range of about 10 to 30 degrees. In embodiments, the range of rotation of the intermediate support may be in the range of about 20 to 40 degrees. In embodiments, the range of rotation of the intermediate support may be in the range of about 5 to 40 degrees.

The intermediate support frame 444.1 is pivotally connected to an upper suspension frame 454 having a pair of arms 456, 458, the arms pivotally connected at a pair of side pivot connections 460, 462 at left and right portions 466, 468 of the intermediate support frame 444.1 thereby providing a left right extending axis α2. The arms extending rearwardly to a crossing portion 464 connected to the hitch coupling portion 400.

The suspension assembly 401 defining therein the motor unit receiving region 413. Positioning the motor therein results in the weight of the motor essentially being an insignificant consideration in the pivoting of the mower deck, either about the forward rearward axis α1, or the left right axis α2. That is, the weight of the motor does not effect any significant moment about the respective axis α1 and α2.

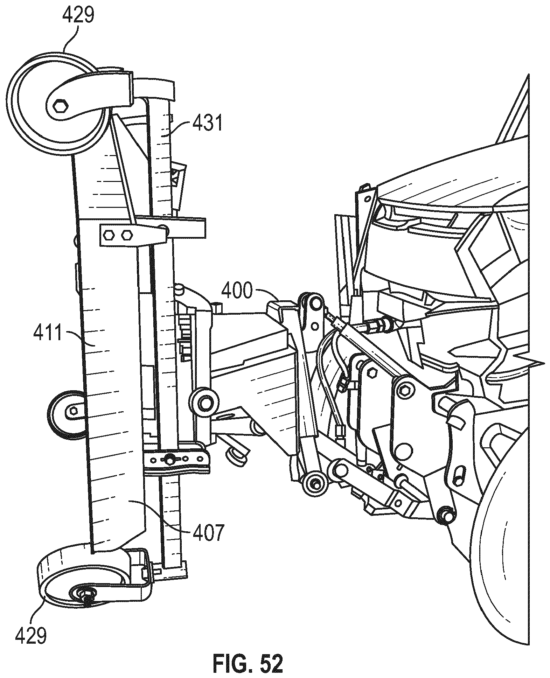

A forward margin 403.4 of the mower deck 403, when the mower deck is elevated as illustrated in FIG. 43, may be readily lifted to the position illustrated in FIGS. 51 and 52 where the cutting region 425 is facing forward. This arrangement providing for easy cleaning, inspection, and maintenance and further reduces the overall footprint of the vehicle and implement for parking and/or storage.

A pair of manually operable extendible retractable biased pins may be fastened to the left and/or right portions 466, 468 of the intermediate support frame 444.1 to extend into apertures 460.1, 460.2 on the arms 456, 458 of the upper suspension frame 454. The arms may have lead in cam surfaces 472.1, 472.2 for deflecting the pins as the mower deck is rotated upwardly such that the pins are automatically retracted as the pins approach the apertures and then extend into the apertures locking the mower deck in the upward position as shown in FIGS. 51 and 52.

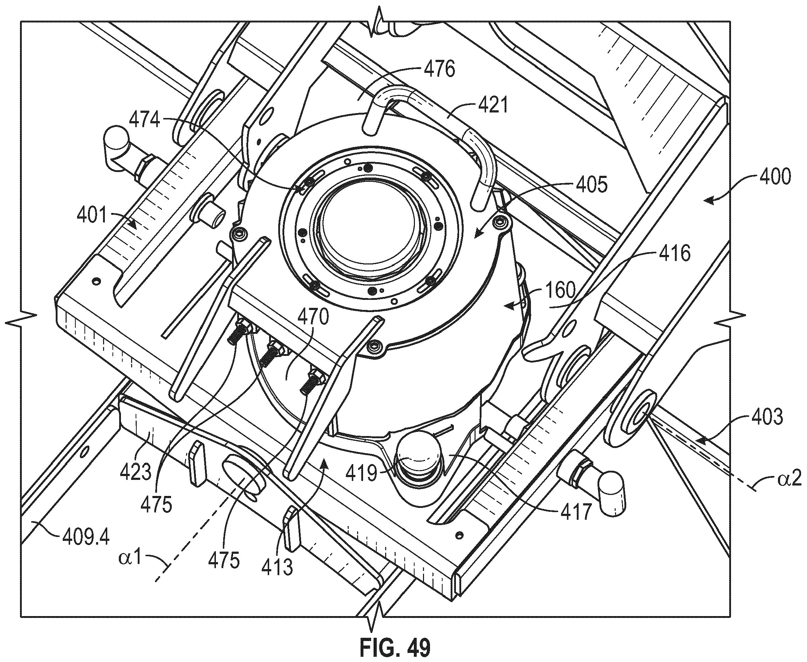

Referring also to FIGS. 49, 53 and 56, in an embodiment, modular electric motor unit 405 comprises electric motor assembly 160, adapter 417 and one or more manually-operated latches, depicted as biased latch pins 419.

Electric motor assembly 160, in an embodiment, includes electric motor 470, electrical interface 474, and handle 421.

Electric motor 470 may comprise any of a variety of electrically-powered motors for driving mechanical components and structures of implements 124, including mower implement 124. Electric motor 470 may comprise various electrical characteristics, AC or DC, single-phase or three-phase windings, and so on, with varying degrees of horsepower and torque, depending on implement 124 needs. In an embodiment, implement motor assembly 160 power is in a range of 5hp to 60 hp; in another embodiment, motor assembly 160 power is in a range of about 20 hp to about 40 hp. In another embodiment, motor assembly is in a range of about 25 to 45 hp.

Electric motor 470 also includes bottom portion 433 and motor output shaft 435 with coupling end 437. Bottom portion 433, in an embodiment, may be circular, and be configured to be received by adapter 417 as described further below. In an embodiment, motor output shaft 435 projects through an opening in bottom portion 433 of motor electric motor 470, extending outwardly and away from bottom portion 433. In an embodiment, coupling end 437 defines implement-shaft receiving cavity 439 and includes a plurality of alternating splines 441 and grooves 443. Coupling end 437 and implement-receiving cavity 439 are configured to connect to a cooperating coupling 440, which may include a drive shaft 440.2 , as described further below, for rotating the mower blades 423.

Electrical interface 474 may include various electrical connectors, wiring harnesses, wires, and electrical terminals for receiving motor power and motor control or communication signals from powersports vehicle 100. In an embodiment, electrical interface 474 includes a plurality of terminals 475 for receiving motor power from powersports vehicle 100 and one or more control-and-communications wiring harness 477 with connector.

In an embodiment, motor power from powersports vehicle 100 may be supplied via electrical interface 474 and terminals 475 from a battery of powersports vehicle 100 or from a battery dedicated to powering electric motor 470 that may be located on implement 124, hitch 122 or powersports vehicle 100. In the case of an electric vehicle 100, power may be provided by a traction-motor battery of the vehicle. In the case of an ICE-powered powersports vehicle 100, power may be provided by an auxiliary battery, that in an embodiment is charged by an electrical charging system of powersports vehicle 10. In some embodiments, power from a battery may be provided via an inverter for converting DC battery power to AC motor power.

In an embodiment, control-and-communications wiring harness 477 communicatively couples electric motor 470 to a controller of powersports vehicle 100 for control of implement 124 and its electric motor 470.

Electrical interface 474 may also include other harnesses and connectors for receiving low-voltage DC power to electric motor 470 to power optional electronics that may be part of electric motor assembly 160, such as an RFID reader configured to read an RFID tag of implement 124.

Handle 421, in an embodiment, forms a U shape extending outward and away from electric motor 470 and is configured to be grasped by a user mounting modular electric motor unit 405 to implement 124. In one embodiment, electric motor assembly 160 may include a plurality of handles 409, such as a first handle on a first side of electric motor assembly 160, and a second handle 409 on a second and opposite side of electric motor assembly 160. A pair of opposing handles may be particularly useful for lifting and manipulating larger, heavier modular electric motor units 401.

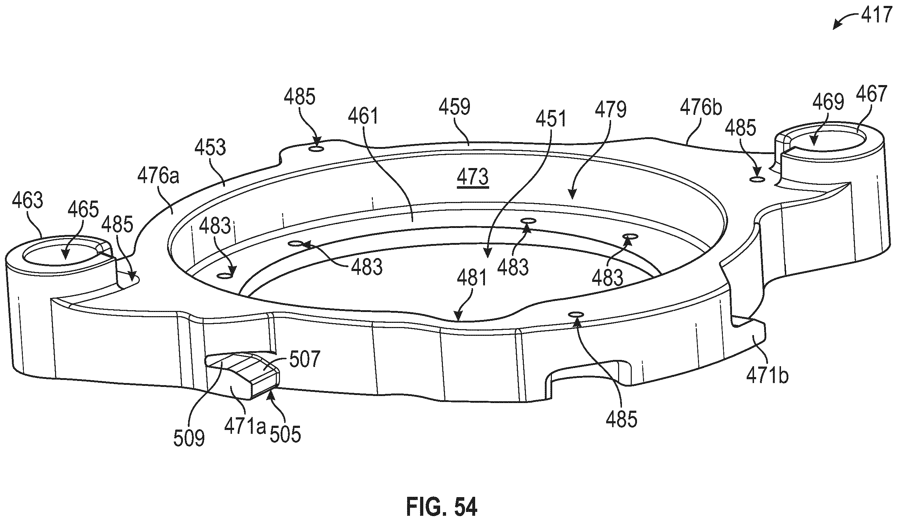

Referring to FIGS. 54-56, in an embodiment and as depicted, adapter 417 forms a generally annular shape and defines central opening 451. In an embodiment, adapter 417 includes top side 453, bottom side 455 with bottom surface 457, annular body portion 459 with flange portion 461, first latch-pin receiving portion 463 defining first pin-receiving through channel 465, second latch-pin receiving portion 467 defining second pin-receiving channel 469, and a plurality of interface portions 471, including first interface portion 471a, second interface portion 471b and third interface portion 471c. Although extendable retractable pins are illustrated as providing a latching of the modular electric motor unit to the mower deck, other latches such as over-center clamps or other mechanisms may be utilized to effect a toolless attachment and removal of the motor unit 405 to the mower deck 403.

Annular body portion 459 forms a generally annular shape and includes flanged portion 461, sidewall 473, first side 475 and second side 476b. Sidewall 473 may generally form an annular shape, and together with flanged portion 461 define annular motor-receiving channel 479 configured to receive bottom portion 433 of electric motor assembly 160. In other embodiments, motor-receiving channel 479 may define shapes other than an annular ring, but may generally have a shape that is complementary to bottom end 433 of electric motor assembly 160 to be able to receive bottom end 433.

In an embodiment, body portion 459 and sidewall 473 form keyway 481 configured to receive a key or other structure of electric motor assembly 160 for orientation of electrical motor assembly 160.

Flanged portion 461, in an embodiment, may include a plurality of through holes 483 for receiving fasteners or other structures of electric motor assembly 160. Body portion 459 may also include a plurality of holes 485 for receiving fasteners to connect electric motor assembly 160 to body portion 459 and adapter 417.

First latch-pin receiving portion 463 is attached to, and may be integral with, body portion 459 at first side 475 of body portion 459. In an embodiment, and as depicted, first latch-pin receiving portion 463 includes flanged portion 487, sidewall 489, and raised portion 499a defining gap 493. Flanged portion 487 with sidewall 489 form pin-receiving through channel 465

Second latch-pin receiving portion 467 is attached to, and may be integral with, body portion 459 at second side 476b of body portion 459. In an embodiment, and as depicted, second latch-pin receiving portion 467 includes flanged portion 495, sidewall 497, and raised portion 499b defining gap 501. Flanged portion 495 with sidewall 497 form pin-receiving through channel 469.

In an embodiment, first latch-pin receiving portion 465 is positioned opposite from second latch-pin receiving portion 467.

In an embodiment, each interface portions 471, including 471a, 471b and 471c, are attached to body portion 459 and extend circumferentially at outer periphery 503 of body portion 459. Each interface portion 471, in an embodiment, includes circumferentially-facing end face 505 with first surface 507, which may be an angled surface, and second or seating surface 509, which may be a horizontal surface. Third or stop surface 509 of body portion 459 may also comprise a portion of interface portion 471. In the embodiment depicted, adapter 417 includes three interface portions 471. However, in other embodiments, adapter 417 may include fewer or more interface portions 471, depending on motor size, motor shape, implement configuration, and so on.

Manually-operated biased latch pins 419 include grasping portion 921, pin 523, pin free end 525 and a biasing spring (not depicted).

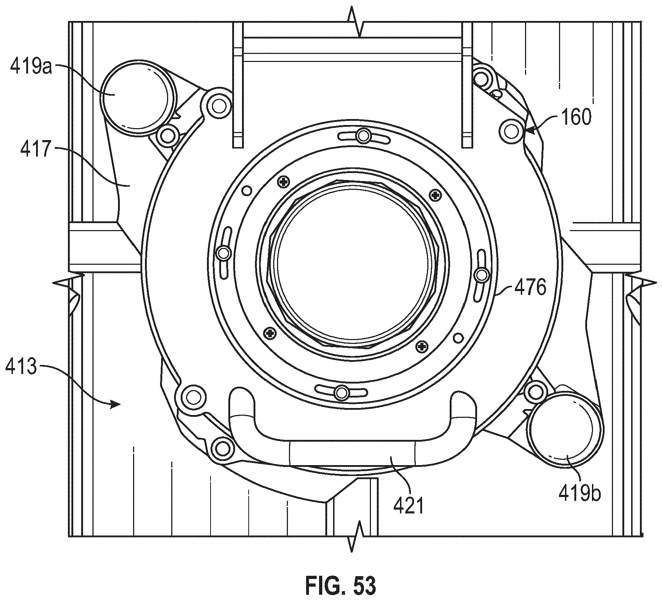

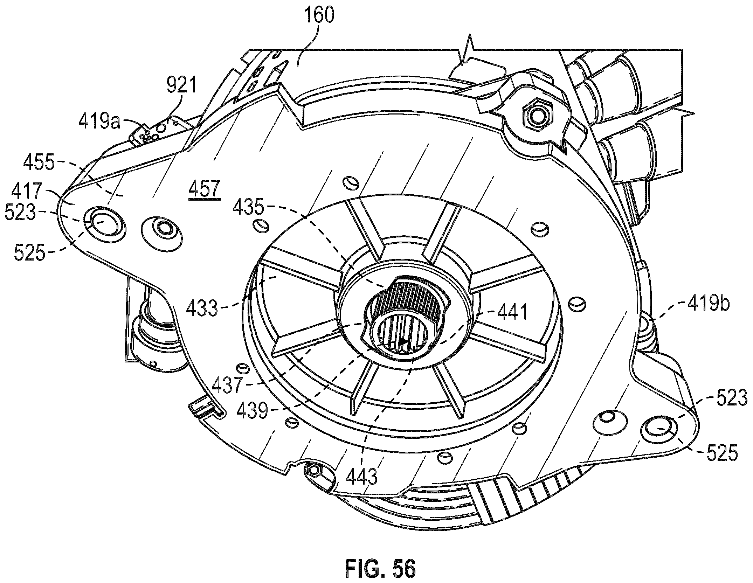

Referring also to FIGS. 49 and 53, when modular electric motor unit 405 is assembled, bottom end 433 of electric motor assembly 160 is received into motor-receiving channel 479 of adapter 417. Fasteners pass through holes in electric motor assembly 160 and holes 485 of adapter 417 to attach electric motor assembly 160 to adapter 417. Manually-operated biased latch pins 419 are received into first and second latch-pin receiving portions 463 and 467, with pins 525 and biasing springs of latch pins 419 being received into pin-receiving through channels 465 and 469. In the configuration depicted in FIG. 56, latch pins 419 are in a motor-release position, such that pin ends 525 do not project beyond adapter bottom surface 457. Conversely, in a motor-attach position, ends 525 would project beyond adapter bottom surface 457 to be received into holes of receiving region 413, as described further below.

In an embodiment if modular electric motor unit 405, coupling end 437 of motor output shaft 435 extends outward from motor bottom end 433, but does not extend beyond adapter bottom surface 457. By not extending beyond surface 457, when modular electric motor unit 405 is not connected to mower implement 124, bottom surface 457 of adapter 417 may rest flat on a storage surface.

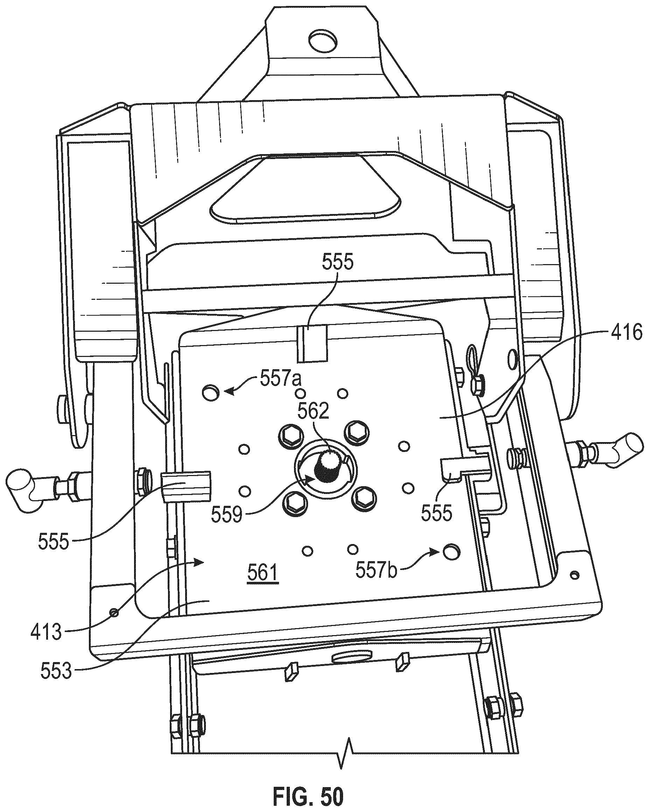

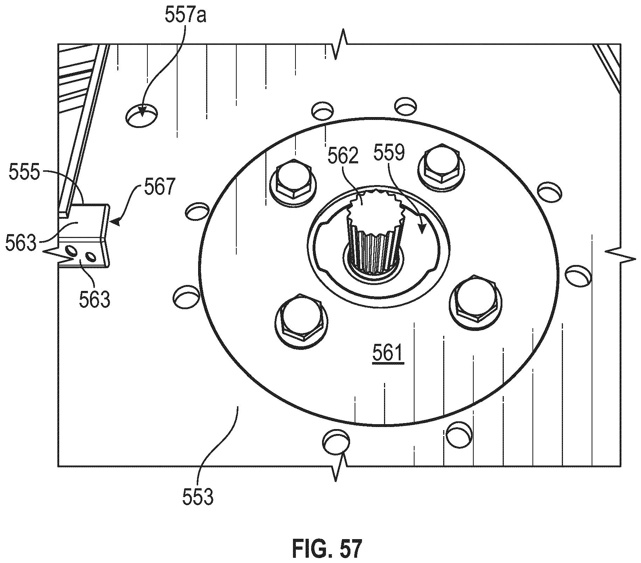

Referring to FIGS. 50 and 57, receiving region 413 of mower deck 403 configured to receive modular electric motor unit 405 is depicted. In this embodiment, receiving region 413 comprises a platform raised above, and spaced apart from, upper plate portion 409 of mower deck 403. In this embodiment, receiving region 413 includes seat 553, which may be a plate or substantially plate-like structure, and a plurality of capture portions 555. Seat 553 defines latch-pin receiving holes 557, including first latch-pin receiving hole 557a and second latch-pin receiving hole 557b. Seat 553 also defines coupling hole 559.

Seat 553 may be a generally flat structure for receiving adapter 417 of modular electric motor unit 405, with surface 561 configured to abut bottom surface 457 of adapter 417. Holes 557 are configured to receive pin ends 525 of pins 523 of manually-operated biased latch pins 419.

Cooperating coupling 562 of mower deck 403 extends through coupling hole 559 of seat 553, and beyond plate surface 561. In an embodiment, cooperating coupling 562 is a splined structure configured to be received into implement-coupling receiving cavity 439 at coupling end 437 of motor shaft 435.

Capture portions 555 are configured to "capture" portions of adapter 417 to assist with securing modular electric motor unit 405 to receiving region 413 of mower deck 403. More specifically, capture portions 555 are configured to capture interface portions 471 of adapter 417.

In an embodiment, receiving region 413 includes three capture portions 555 located at seat 553, though in other embodiments, more or fewer capture portions 555 may be used. Capture portions 555 may be directly attached to surface 561 of seat 553, may be attached to an edge of seat 553 such that capture portions are suspended above surface 561, or may be attached to another structure of mower deck 403 of suspension assembly 401 such that capture portions are suspended above surface 561. Other embodiments of receiving region 413 having capture portions 555 positioned at seat 553 are also contemplated.

In an embodiment, each capture portion 555 forms an L shape. In such an embodiment, capture portion 555 includes first portion 563 extending in a direction transverse to surface 561 of seat 553, and second portion 565 extending transversely from an end of first portion 563. Each capture portion 555 in conjunction with surface 561 of seat 553 forms adapter interface-receiving portion 567. Adapter interface-receiving portion 567 may define a slot or space for receiving an interface portion 471 of adapter 417.

Referring to FIGS. 44-45, 49-50 and 56-57, when modular motor unit 405 is received by receiving region 413 and in a locked and operating position, coupling end 437 of motor output shaft 435 is coupled to cooperating coupling 562 of mower deck 403, which in an embodiment means that cooperating coupling 562 is received into implement-coupling receiving cavity 439 of coupling end 437. In one such embodiment, splines 441 of coupling end 437 are received into corresponding grooves of cooperating coupling 562, and splines or teeth of cooperating coupling 562 are received into grooves 443 of cooperating coupling 562, thereby engaging motor output shaft 435 with implement 124. Modular electric motor unit 405 seats on seat 553, such that bottom surface 457 of adapter 417 is abutted against surface 561 of seat 553. Capture portions 555 are engaged with, or capture, interface portions 471 of adapter 417, which in an embodiment, means that each interface portion 471 is received into interface-receiving portion 567. Pin free ends 525 of manually-operated biased latch pins 419a and 419b are received into first and second latch pin receiving holes 557a and 557b.

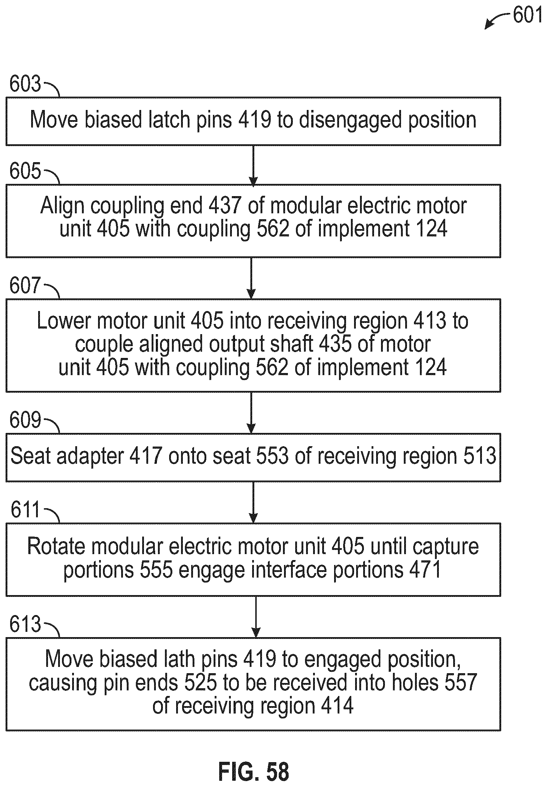

Referring to FIG. 58, in addition to the devices, systems and methods described above, embodiments of the present disclosure also include method 601 for tool-lessly, removably coupling modular electric motor unit 405 to implement 124, which in an embodiment is a mower implement.

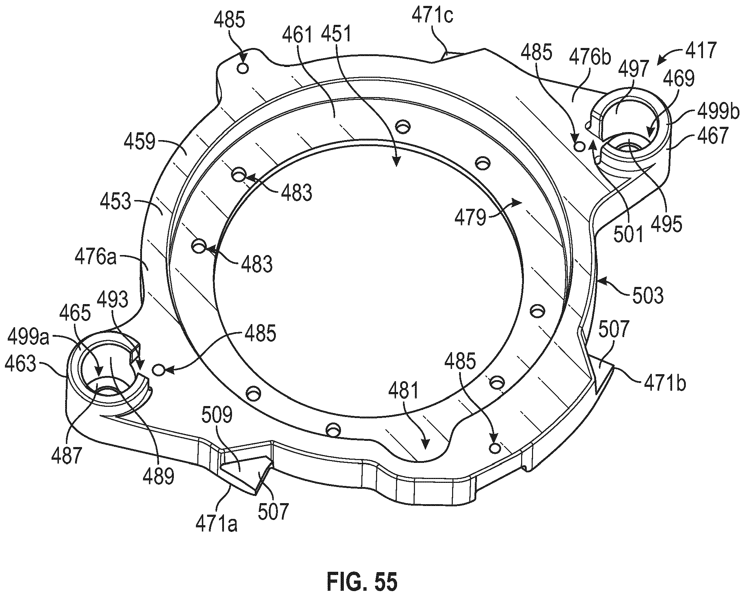

At step 603, and also referring to FIGS. 55 and 56, a user moves manually-operated biased latch pins 419 to a disengaged position, such that pin ends 525 of pins 523 do not extend beyond bottom surface 457 of adapter 417, i.e., pins 523 are retracted into adapter 417. In an embodiment, a latch pin 419 may be grasped at grasping portion 512 and pulled upward and away from adapter 417, moving end 525 of pin 523 into channel 465 or 469. In an embodiment, a portion of biased latch pin 419 forms a key that seats in gap 493 or 501 of adapter 417, preventing rotation of biased latch pins 419 when biased latch pin 419 is in the engaged position with the key in gap 493. The upward pulling force, in addition to moving pin end 525 into channel 465/469, also causes the key to be removed from gap 493. Biased latch pin 419 may then be rotated to lock biased latch pin in the disengaged position, as is depicted in FIG. 56.

At step 605, coupling end 437 of modular electric motor unit 405 is aligned with implement cooperating coupling 562 of implement 124, which may be along a common vertical axis.

At step 607, modular electric motor unit 405 is lowered into receiving region 413 causing coupling end 437 of motor output shaft 435 to couple with cooperating coupling 562 of implement 124. In an embodiment, coupling end 437 receives cooperating coupling 562 into implement-coupling receiving cavity 439. In one such embodiment, coupling end 437 and cooperating coupling 562 are each splined with teeth and grooves, with teeth of cooperating coupling 562 fitting into grooves of coupling end 437, and vice versa.

At step 609, adapter 417 is seated onto seat 553 of receiving region 513. In an embodiment, this step includes seating bottom side 455 and its bottom surface 457 against a top surface of flanged portion 461 of seat 553.

At step 611, modular electric motor unit 405 is rotated about a vertical axis passing through motor output shaft 435 and implement cooperating coupling 562 until capture portions 555 engage and capture interface portions 471 of adapter 417 preventing further rotation. In an embodiment, capture portions 555 may slidably engaged angled surfaces 507, and interface portions 471 may be received into or seated in interface-receiving portion 567. When capture portions 555 engage and capture interface portions 471, modular electric motor unit 403 may not be lifted or moved upward and away from surface 561. In an embodiment a direction of rotation of modular electric motor unit 405 is in a same direction of rotation of motor output shaft 435 during implement operation.

At step 613, Manually-operated biased latch pins 419 are moved to an engaged position, causing pin ends 525 to be received into holes 557 of receiving region 414, thereby preventing rotation of modular electric motor unit 405. In an embodiment, step 613 may also include the steps of rotating biased latch pins 419 and seating a key of latch pin 419 in to gap 493 of adapter 417. With pin ends 525 in seat 553 holes 557, modular electric motor unit 405 is rotationally locked.

Consequently, modular electric motor unit 405 is then removably locked into an engaged or operational position and cannot be rotated within, or moved out of, receiving region 413.

Removing modular electric motor unit 405 may be accomplished by firstly moving biased latch pins 419 to a disengaged position as described in step 603, rotating modular electric motor unit 405 in a direction opposite to the engagement direction so as to remove interface portions 471 from capture portions 555, followed by lifting modular electric motor unit 405 upward and away from seat 553 of suspension assembly 401.

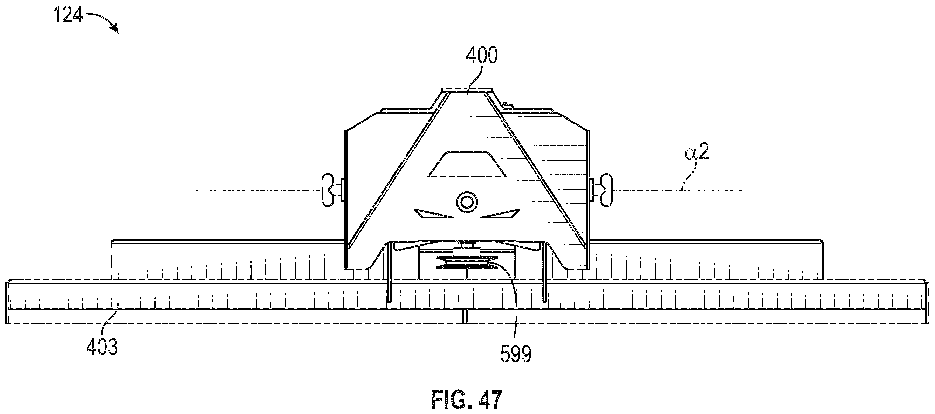

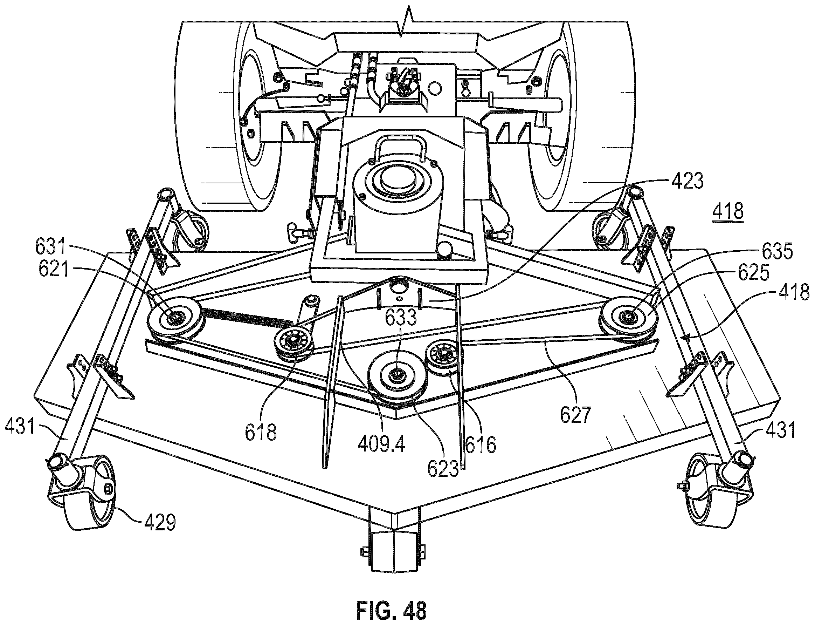

Referring to FIGS. 47, 48, 50, 51, and 57, when the modular electric motor unit 405 is installed, seated and operating, the coupling end 437 engages with cooperating coupling 440 and rotates drive shaft 440.2 which extends through the raised platform 416 and is attached to drive pulley 599 part of pulley system 418 as best shown in FIG. 48. The three mower blades 423 are attached to mower blade shafts 631, 633, 635 that extend through the upper plate portion 409 and are attached to driven pulleys 621, 623, 625. The pulley system also may include an idler and/or tensioner pulleys 616, 618. A belt 627 engages the drive pulley 599, best shown in FIG. 7, and further engages driven pulleys to rotate the mower blades. As illustrated in FIG. 7, a gap is provided below the drive pulley equal or greater that the belt thickness such the gap may facilitates belt replacement.

The following clauses illustrate example subject matter described herein.

Clause 1. A modular hitch device for detachable connection to a powersports vehicle, comprising:
a hitch frame;
a hitch-vehicle coupling portion connected to the hitch frame and configured to detachably connect the modular hitch device to the powersports vehicle;
a hitch-implement coupling portion connected to the hitch frame and configured to detachably connect the modular hitch device to an implement;
an electrical interface configured to electrically connect the modular hitch device to a power source; and
an electrical actuator mounted to the hitch frame and in electrical connection with the electrical interface, the electrical actuator configured to convert electrical power received from the power source to mechanical movement of the modular hitch device.

Clause 2. The modular hitch device of clause 1, wherein the hitch frame, hitch-vehicle coupling portion and hitch-implement coupling portion form at least one of a parallel-motion linkage and a fixed-pivoting linkage.

Clause 3. The modular hitch device of clause 1, wherein the hitch-vehicle coupling portion includes a pair of opposing plates defining a pair of openings configured to receive a pair of insertable pins.

Clause 4. The modular hitch device of clause 3, wherein the insertable pins comprise spring pins.

Clause 5. The modular hitch device of clause 1, wherein the electrical actuator is connected to the hitch-vehicle coupling portion and the hitch frame, and is configured to move the hitch frame relative to the hitch-coupling portion.

Clause 6. The modular hitch device of clause 1, wherein the hitch-implement coupling portion includes forms an inverted V shape with a left arm and a right arm, the left and right arms joined at an upper portion of the hitch-implement coupling portion.

Clause 7. The modular hitch device of claim 1, further comprising a variable-length connector portion connecting the hitch-implement coupling portion to an upper portion of the modular hitch device.

Clause 8. The modular hitch device of clause 1, wherein the hitch frame is pivotally connected to the hitch-vehicle coupling portion and the hitch frame is pivotally connected to the hitch-implement coupling portion.

Clause 9. The modular hitch device of clause 1, wherein the hitch frame is pivotally connected to the hitch-vehicle coupling portion and the hitch frame is fixedly connected to the hitch-implement coupling portion

Clause 10. The modular hitch device of clause 1, wherein the electrical interface comprises an electrical connector configured to connect to an electrical connector of the powersports vehicle.

Clause 11. The modular hitch device of clause 1, further comprising a battery, the battery being the power source, and being mounted to the modular hitch device.

Clause 12. The modular hitch device of clause 11, further comprising a wireless transceiver configured to communicate with at least one of a controller of the powersports vehicle or a remote computing device.

Clause 13. A system for connecting and powering a powersports vehicle implement, comprising:
a modular hitch device connectable to a powersports vehicle, the modular hitch device including:
a hitch frame;
a hitch-vehicle coupling portion connected to the hitch frame and configured to detachably connect the modular hitch device to the powersports vehicle;
a hitch-implement coupling portion connected to the hitch frame;
a hitch electrical interface configured to electrically connect the modular hitch device to a first power source; and
an electrical actuator mounted to the hitch frame and in electrical connection with the electrical interface, the electrical actuator configured to convert electrical power received from the first power source to mechanical movement of the modular hitch device;
   and
an implement device connectable to the modular hitch device, the implement device including:
   a mechanical interface configured to connect to the hitch-implement coupling portion of the modular hitch device; and
   an electromechanical device for performing an operation of the implement device.

Clause 14. The system of clause 13, wherein the electromechanical device is an actuator configured to move a portion of the implement device.

Clause 15. The system of clause 13, further comprising an implement electrical interface configured to electrically connect the implement device to a second power source and to receive control signals from the powersports vehicle at the implement.

Clause 16. The system of clause 15, further wherein the electromechanical device is a detachable motor in electrical connection with the electrical interface, the detachable motor configured to convert power received from the second power source to mechanical movement of at least a portion of the implement device.

Clause 17. The system of clause 15, wherein the first power source and the second power source are the same power source.

Clause 18. The system of clause 16, wherein the power source is a traction-motor battery of the powersports vehicle.

Clause 19. The system of clause 13, wherein the first power source comprises a battery mounted to the modular hitch device.

Clause 20. The system of clause 15, wherein the second power source comprises at least one battery mounted to at least one of the modular hitch device and the implement device.

Clause 21. The system of clause 13, wherein the first power source comprises a battery mounted to the powersports vehicle.

Clause 22. The system of clause 21, wherein the battery mounted to the powersports vehicle comprises a traction-motor battery.

Clause 23. The system of clause 13, further comprising a mounting mechanism configured to connect to the powersports vehicle and to detachably connect to the hitch-vehicle coupling portion.

Clause 24. The system of clause 13, further comprising an implement controller configured to control operation of the implement device, including the detachable motor, based on the received control signals from the powersports vehicle.

Clause 25. The system of clause 24, wherein the implement controller is configured to control operation of the hitch device.

Clause 26. The system of clause 13, further comprising an implement controller configured to control operation of the hitch device.

Clause 27. The system of clause 25, wherein the implement controller is integrated into an implement-wiring harness of the powersports vehicle, the implement-wiring harness of the powersports vehicle connectable to an implement connector mounted to the implement device.

Clause 28. The system of clause 13, further comprising a portable power connection configured to supply power to an external device.

Clause 29. The system of clause 15, further comprising a radio tag and a radio-tag reader, the radio tag mounted to one of the implement device or the portable motor and the radio-tag reader mounted to the other of the implement device or the portable motor.

Clause 30. The system of clause 29, wherein a controller of the implement device is configured to determine whether to power the electromechanical device based on input received from the radio-tag reader.

Clause 31. The system of clause 29, wherein the controller of the implement device is configured to determine at least one of a vehicle speed limit and an implement torque limit.

Clause 32. The system of clause 13, further comprising an input device in electrical communication with the implement device.

Clause 33. The system of clause 32, wherein the input device comprises at least one of a joystick and a touch-screen display of an in-vehicle infotainment (IVI) system, mounted to the powersports vehicle.

Clause 34. The system of clause 13, wherein the implement device is selected from the group consisting of: a mower, snow blower, bucket, rotary broom, brush mower, wood chipper, power grader, box scraper, post driver, soil conditioner, landscape rake, spreader, sprayer, power washer, auger, brush cutter, log splitter, vacuum collector, disc plow, tiller, trimmer mower, pallet forks, debris blower, cultivator, and planter.

Clause 35. The system of clause 13, wherein the implement device is configured for lifting or transporting objects.

Clause 36. A method of distributing electrical power in a powersports vehicle having an attached modular vehicle hitch and vehicle implement, comprising:
distributing first electrical power from the powersports vehicle to the modular vehicle hitch;
receiving the first electrical power at the modular hitch device and modifying the first electrical power for use by an actuator of the modular vehicle hitch;
distributing the modified first electrical power to the actuator of the modular vehicle hitch; and
distributing first electrical power from the powersports vehicle to the vehicle implement connected to the modular vehicle hitch for powering an electromechanical device of the vehicle implement.

Clause 37. The method of clause 36, wherein distributing first electrical power from the powersports vehicle to the modular vehicle hitch comprises distributing direct-current (DC) power from a battery of the powersports vehicle to the vehicle hitch through a wiring harness and connector system.

Clause 38. The method of clause 37, wherein distributing DC power from a battery of the powersports vehicle comprises distributing DC power from a traction-motor battery of the powersports vehicle.

Clause 39. The method of clause 36, wherein receiving the first electrical power at the hitch device and modifying the first electrical power for use by an actuator of the modular vehicle hitch comprises receiving the first electrical power at a voltage converter and reducing the voltage of the first electrical power for use by the actuator of the modular vehicle hitch.

Clause 40. The method of clause 39, wherein receiving the first electrical power at the hitch device and modifying the first electrical power for use by an actuator of the modular vehicle hitch comprises receiving the first electrical power at a voltage converter mounted to the vehicle hitch and reducing the voltage of the first electrical power for use by the actuator of the modular vehicle hitch.

Clause 41. The method of clause 36, wherein distributing first electrical power from the powersports vehicle to the vehicle implement connected to the modular vehicle hitch comprises distributing DC power from a battery of the powersports vehicle to the vehicle implement through a wiring harness and connector system.

Clause 42. The method of clause 41, wherein distributing DC power from a battery of the powersports vehicle comprises distributing DC power from a traction-motor battery of the powersports vehicle.

Clause 43. The method of clause 42, further comprising distributing DC power from the traction-motor battery of the powersports vehicle to an implement inverter, which provides power to the electromechanical device of the vehicle implement.

Clause 44. The method of clause 36, further comprising distributing power to an external-power connector mounted to the modular vehicle hitch, the external-power connector configured to provide power to an external electrically-powered device.

Clause 45. The method of clause 36, further comprising distributing second electrical power from the powersports vehicle to the vehicle implement for powering devices associated with the vehicle implement.

Clause 46. The method of clause 45, wherein distributing second electrical power from the powersports vehicle to the vehicle implement for powering devices associated with the vehicle implement comprises distributing DC power from a powersports vehicle battery to one or more of a implement controller, a first implement auxiliary device, and a second implement auxiliary device.

Clause 47. The method of clause 46, wherein the first implement auxiliary device is an implement actuator.

Clause 48. The method of clause 36, wherein distributing first electrical power from the powersports vehicle to the vehicle implement connected to the modular vehicle hitch for powering an electric motor of the vehicle implement.

Clause 49. A method of controlling a modular vehicle hitch and vehicle implement for a powersports vehicle, comprising:
receiving a user input at a user input device of the powersports vehicle, the user-input device in electrical communication with a vehicle controller over a vehicle network;
transmitting a first vehicle-hitch control signal based on the user input received at the user-input device from the vehicle controller to an implement controller in electrical communication with the vehicle hitch and the vehicle implement, the first vehicle-hitch control signal including a request for movement of the modular vehicle hitch;
transmitting a first vehicle-implement control signal from the vehicle controller to the implement controller, the first vehicle-implement control signal including a request for operation of the vehicle implement;
receiving the first vehicle-hitch control signal at the implement controller, and transmitting a second vehicle-hitch control signal, based on the first vehicle-hitch control signal, from the implement controller to an actuator of the modular vehicle hitch, thereby causing movement of the modular vehicle hitch; and
receiving the first vehicle-implement control signal at the implement controller, and transmitting a second vehicle-implement control signal, based on the first vehicle-implement control signal, from the implement controller to an electromechanical device of the vehicle implement, thereby causing an operation of the vehicle implement.

Clause 50. The method of clause 49, wherein receiving a user input at a user input device of the powersports vehicle comprise receiving a user input from a joystick mounted in the powersports vehicle.

Clause 51. The method of clause 49, wherein receiving a user input at a user input device of the powersports vehicle comprise receiving a wireless signal from the user input device.

Clause 52. The method of clause 49, wherein transmitting a second vehicle-hitch control signal from the implement controller to an actuator of the modular vehicle-hitch comprises transmitting the second vehicle-hitch control signal through a vehicle-hitch wiring harness.

Clause 53. The method of clause 49, wherein transmitting a second vehicle-hitch control signal from the implement controller to an actuator of the vehicle-hitch comprises transmitting the second vehicle-hitch control signal wirelessly.

Clause 54. The method of clause 49, wherein transmitting a second vehicle-implement control signal from the implement controller to an electromechanical device of the vehicle-implement comprises transmitting the second vehicle-implement control signal through a vehicle-implement wiring harness.

Clause 55. The method of clause 49, wherein transmitting a second vehicle-implement control signal from the implement controller to an electromechanical device of the vehicle-implement comprises transmitting the second vehicle-implement control signal wirelessly.

Clause 56. The method of clause 49, wherein transmitting a second vehicle-implement control signal from the implement controller to an electromechanical device of the vehicle implement comprises transmitting a second vehicle-implement control signal from the implement controller to an electric motor or an actuator of the vehicle implement.

Clause 57. The method of clause 49, wherein the vehicle network comprises a vehicle control-area network.

Clause 58. The method of clause 49, wherein the vehicle network comprises a vehicle local interconnect network.

Clause 59. A system for connecting and powering a powersports vehicle implement, comprising:
a modular hitch device connectable to a powersports vehicle, the modular hitch device including:
a hitch frame;
a hitch-vehicle coupling portion connected to the hitch frame and configured to detachably connect the modular hitch device to the powersports vehicle;
a hitch-implement coupling portion connected to the hitch frame; and
a hitch actuator mounted to the hitch frame and in electrical connection with the electrical interface, the actuator configured to move a position of the modular hitch device relative to the powersports vehicle;
   and
an implement device connectable to the modular hitch device, the implement device including:
   a mechanical interface configured to connect to the hitch-implement coupling portion of the modular hitch device; and
   an electromechanical device for performing an operation of the implement device

Clause 60. The system of clause 59, wherein the modular hitch device further includes a hitch electrical interface configured to electrically connect the modular hitch device to a first power source.

Clause 61. The system of clause 60, wherein the first power source is a battery.

Clause 62. The system of clause 61, wherein the battery is mounted to the powersports vehicle.

Clause 63. The system of clause 59, wherein the hitch actuator is a hydraulic actuator.

Clause 64. The modular hitch device of clause 1, further comprising a hitch mount configured to mount to the powersports vehicle and to detachably connect to the hitch-vehicle coupling portion.

Clause 65. The modular hitch device of clause 64, wherein the hitch mount includes a main portion configured to attach to the powersports vehicle, a first coupling portion defining a pin-receiving aperture and a slot, and a first pin, wherein the first pin is configured to be removably received by the pin-receiving aperture of the first coupling portion and by an aperture of the hitch-vehicle coupling portion, and the slot is configured to removably receive a portion of the first coupling portion, thereby detachably coupling the first coupling portion of the hitch mount to the hitch-vehicle coupling portion.

Clause 66. A powered implement system for a powersport vehicle comprising:
a modular electric motor unit comprising an electric motor mounted to an adapter and having an output shaft with a coupling end, the adaptor having an annular shape with an annular flange portion secured to the electric motor, a plurality of circumferentially extending interface portions at a periphery of the adaptor, and a pair manual operated biased latch pins supported by the adaptor and each having an extended position and a retracted position;
a mower implement comprising:
   a mower deck;
   a suspension assembly mounted to and extending upwardly from the mower deck; and
   an implement hitch coupling portion at a rearward end of the suspension assembly, the implement hitch coupling portion configured to connect a hitch device on the powersport vehicle;
   wherein the mower deck comprises a deck housing with a upper plate portion and a downwardly extending skirt portion at an outer periphery of the mower deck housing, the mower deck housing defining a cutting region, the mower deck having a single receiving region for receiving the modular electric motor unit from the mower deck, the mower deck having at the receiving region a plurality of capture portions for capturing the plurality of interface portions of the adaptor and further having at the receiving region a pair of apertures for receiving the pair of latch pins, the mower deck having a cooperating coupling centrally located in the receiving region for receiving and connecting with the coupling end of the modular electric motor unit.

Clause 67. The powered implement system for a powersport vehicle of clause 66, wherein the mower deck further comprises a cutting system and wherein the cooperating coupling is connected to the cutting system, of the mower assembly, the cutting system comprising a drive pulley attached to the cooperating coupling, a plurality of cutting blades in the cutting region, the plurality of cutting blades each mounted to a respective shaft extending from and through the upper plate portion and each of the respective shafts having a respective driven pulley above the upper plate portion, the cutting system further comprising a belt connecting the drive pulley and each of the respective driven pulleys, whereby each cutting blade is rotatable by the modular electric motor unit when the modular electric motor unit is received at the receiving region and is operated.

Clause 68. The powered implement system of clause 67, wherein the receiving region for the modular electric motor unit is on a raised platform above and spaced from the upper plate portion, and wherein the drive pulley is connected to the cooperating coupling by a drive shaft extending through and rotatably supported by the raised platform, and wherein the drive pulley is intermediate the raised platform and the upper plate portion, the drive pulley and shaft spaced from the upper plate portion.

Clause 69. The powered implement system of clause 66, 67 or 68, wherein the electric motor is less than about 40 hp.

Clause 70. The powered implement system of clause 66 or 67, in combination with the powersport vehicle, and wherein the implement hitch coupling portion is hitched to a hitch device on the front of the powersport vehicle, the hitch device operable to raise and lower the mower implement.

Clause 71. The combination of clause 70, wherein the powersport vehicle comprising a high voltage battery for operating a prime mover and the high voltage of the battery is converted through circuitry for operating the electric motor of the modular electric motor unit.

Clause 72. The combination of clause 70, wherein the powersport vehicle comprises an internal combustion engine as a prime mover, the combination further comprising an auxiliary battery for operating the electric motor unit, the auxiliary battery connected to an electrical system of the powersport vehicle through circuity providing a charging current from the electrical system.

Clause 73. The combination of any one of clauses 70-72, wherein the mower deck is rotatable from a generally horizontal orientation with the cutting region facing downwardly to a storage and maintenance position where the cutting region is facing forwardly.

Clause 74. The combination of any one of clauses 70-72, wherein the mower deck further comprises a plurality of wheels positioned about the periphery of the mower deck housing, and wherein the suspension assembly has a first set of pivot connections with a first pivot axis extending forwardly and rearwardly and has a second set of pivot connections with a second pivot axis extending left and right, the first and second sets of pivot connections allowing the mower deck to follow ground slopes and undulations in front of the powersport vehicle.

Clause 75. The combination of clause 74, wherein the mower deck is rotatable from a generally horizontal orientation with the cutting region facing downwardly to a storage and maintenance position where the cutting region is facing forwardly by way of the second set of pivot connections.

Clause 76. The combination of clause 74 or 75, wherein the first set of pivot connections of the suspension system has two second pivot connections and wherein the receiving region for the modular electric motor unit is intermediate the two second pivot connections and the axis of the first set of pivot connections extends through the receiving region.

Clause 77. The combination of clause 74, 75 or 76, wherein the second set of pivot connections of the suspension system has a pair of second pivot connections and wherein the receiving region for the modular electric motor unit is intermediate the pair of second pivot connections and the axis of the second set of pivot connections extends through the receiving region.

Clause 78. The combination of any of clauses 70-77, further comprising a snowblower implement having a receiving region for receiving the modular electric motor unit.

Clause 79. A powered mower implement for a powersport vehicle comprising:
a mower deck with a motor mounted or mountable thereon, the motor mounted or mountable at a motor mount region on the top side of the mower deck;
a suspension assembly mounted to and extending upwardly from the mower deck;
an implement hitch coupling portion at a rearward end of the suspension assembly, the implement hitch coupling portion connectable to a hitch device on the powersport vehicle;
wherein the mower deck comprises a deck housing with a upper plate portion and a downwardly extending skirt portion at an outer periphery of the mower deck housing, the mower deck housing defining a cutting region below the upper plate portion, the mower deck further comprising a plurality of wheels positioned about the periphery of the mower deck housing;
wherein the suspension system provides a forward rearward pivot axis and a left right pivot axis for the mower deck with respect to the powersport vehicle, and wherein the left right pivot axis is above the forward rearward pivot axis, and wherein the mower deck may be rotated from the cutting region facing downward to the cutting region facing forward by way of the left right pivot axis.

Clause 80. The powered mower implement for a powersport vehicle of clause 79, wherein the motor is electrically or hydraulically powered.

Clause 81. A powered mower implement for a powersport vehicle comprising:
a mower deck comprising deck housing with a upper plate portion and a downwardly extending skirt portion at an outer periphery of the mower deck housing, the mower deck housing defining a cutting region below the upper plate portion, the mower deck further comprising a plurality of wheels positioned about the periphery of the mower deck housing;
a suspension assembly mounted to and extending upwardly from the mower deck;
an implement hitch coupling portion at a rearward end of the suspension assembly, the implement hitch coupling portion connectable to a hitch device on the powersport vehicle;
wherein the mower deck further comprises a raised platform with a motor receiving region rearwardly and centrally mounted on the upper plate portion, the raised platform supporting a drive shaft with a drive pulley positioned above the upper plated portion and below the raised platform, the mower deck further providing three mower blades with three mower blade shafts supported by the upper plate portion, each mower blade shaft having a pulley fixed thereto and positioned above the upper plate portion, a belt connecting the drive pulley to the respective pulleys of the three mower blade shafts.

Clause 82. The powered mower implement for a powersport vehicle of clause 81, wherein the drive pulley and drive shaft have a clearance above the upper plate portion allowing the belt to pass through the clearance facilitating changing the belt.

Clause 83. A powered mower implement hitchable to the front end of a powersport vehicle comprising:
a mower deck comprising deck housing with a upper plate portion and a downwardly extending skirt portion at an outer periphery of the mower deck housing, the mower deck housing defining a cutting region below the upper plate portion, the mower deck further comprising a plurality of wheels positioned about the periphery of the mower deck housing;
a suspension assembly mounted to and extending upwardly from the mower deck;
an implement hitch coupling portion at a rearward side of the suspension assembly, the implement hitch coupling portion connectable to a hitch device on the powersport vehicle;
wherein the suspension assembly comprises a pair of lower pivot supports arranged forward rearwardly of each other on the mower deck, one lower pivot support positioned at a rearward margin of the mower deck, the other lower pivot support positioned forwardly of the one lower pivot support and rearward of a midpoint of the forward rearward length of the mower deck, the suspension assembly further comprising an intermediate support frame configured as a loop defining an opening facing upwardly and downwardly, the intermediate support frame pivotally connected to the pair of lower pivot supports, the suspension assembly further comprising an upper rearward suspension frame with a pair of arms, each of the pair of arms pivotally connected to respective left and right portions of the intermediate support frame at a pair of upper pivot connections, wherein each of the pair of arms extend rearwardly to the implement hitch coupling portion.

Clause 84. The powered mower implement of clause 83, wherein the mower deck is rotatable with a forward margin raisable to an upward position by pivoting the mower deck and intermediate support about the upper pivot connections.

Clause 85. The powered mower implement of clause 84, wherein one of the right and left portions of the intermediate support frame is latchable to the upper rearward suspension frame thereby retaining the mower deck in an upright position.

Clause 86. The powered mower implement of clause 85, wherein a pin is utilized to secure one of the right and left portions of the intermediate support frame, the pin being axially movable between a projecting latching position and a retracted non-latching position.

Clause 87. The powered mower implement of clause 86, wherein the upper rearward suspension frame has a cam surface adjacent to a pin receiving aperture, the cam surface positioned to retract the pin as the mower deck is being raised, the aperture positioned to receive the retracted pin and allow it to extend thereby latching the mower deck in the position with the cutting region facing forward.

Clause 88. The powered mower implement of any of clauses 84-87, wherein the implement further comprises a motor, and wherein the intermediate support frame defining a loop defines a receiving region for the motor installable on the deck, the motor connected to or connectable to a plurality of mower blades.

Clause 89. The powered mower implement of clause 88, wherein the upper rearward suspension frame and the hitch coupling portion define an open area that is sized to allow clearance for the motor when the mower deck is rotated rearwardly.

Clause 90. The powered mower implement of any of clauses 87-89, wherein the motor is a hydraulic motor or an electric motor.

Clause 91. The powered mower implement of any of clauses 87-90, wherein the motor is an electric motor of about 25 to 45 hp.

Clause 92. A powered mower implement for a powersport vehicle, the powered mower implement comprising:
a mower deck comprising deck housing having a downwardly extending skirt portion at an outer periphery of the mower deck housing, the mower deck housing defining a cutting region below the upper plate portion;
a support assembly mounted to and extending upwardly from the mower deck housing;
an implement hitch coupling portion at a rearward end of the support assembly, the implement hitch coupling portion connectable to a hitch device on the powersport vehicle;
wherein the mower deck further comprises a platform with a motor unit receiving region, the platform supporting a drive shaft with a drive pulley, the mower deck further providing three mower blades with three mower blade shafts, each mower blade shaft having a pulley fixed thereto, a belt connecting the drive pulley to the respective pulleys of the three mower blade shafts;
wherein the powered mower implement further comprises a motor unit with an attached interface portion, the motor unit removably latchable to the mower deck with the interface portion at the motor unit receiving region.

Clause 93. The powered mower implement for a powersport vehicle of clause 92, wherein skirt portion extends partially around the outer periphery of the mower deck housing and the mower deck housing does not have support wheels.

Clause 94. The powered mower implement for a powersport vehicle of clause 92, wherein the mower deck further comprises a plurality of wheels positioned about the periphery of the mower deck housing.

Clause 95. The powered mower implement for a powersport vehicle of clause 94, wherein the support assembly is a suspension assembly with a pair of pivot axis providing two degrees of freedom of motion to the mower deck with respect to the powered mower implement when hitched thereto.

Clause 96. The powered implement system of any of clauses 92 to 95, in combination with the powersport vehicle, and wherein the implement hitch coupling portion is hitched to a hitch device on the front of the powersport vehicle, the hitch device operable to raise and lower the mower implement.

Clause 97. The combination of clause 96, wherein the powersport vehicle comprising a high voltage battery for operating a prime mover of the powersport vehicle and the high voltage of the battery is converted through circuitry for operating the electric motor of the modular electric motor unit.

Clause 98. The combination of clause 96, wherein the powersport vehicle comprises an internal combustion engine as a prime mover, the combination further comprising an auxiliary battery for operating the electric motor unit, the auxiliary battery connected to an electrical system of the powersport vehicle through circuity providing a charging current from the electrical system.

Clause 99. The combination of clause 96, wherein the powersport vehicle is a hybrid vehicle having both an internal combustion engine and one or more vehicle electric motors, and a battery system for powering the vehicle electric motors, the battery system also connectible to the powered implement motor unit.

The embodiments above are intended to be illustrative and not limiting. Additional embodiments are within the claims. In addition, although aspects of the present invention have been described with reference to particular embodiments, those skilled in the art will recognize that changes can be made in form and detail without departing from the spirit and scope of the invention, as defined by the claims.

Persons of ordinary skill in the relevant arts will recognize that the invention may comprise fewer features than illustrated in any individual embodiment described above. The embodiments described herein are not meant to be an exhaustive presentation of the ways in which the various features of the invention may be combined. Accordingly, the embodiments are not mutually exclusive combinations of features; rather, the invention may comprise a combination of different individual features selected from different individual embodiments, as understood by persons of ordinary skill in the art.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

For purposes of interpreting the claims for the present invention, it is expressly intended that the provisions of Section 112, sixth paragraph of 35 U.S.C. are not to be invoked unless the specific terms "means for" or "step for" are recited in a claim.

## Claims

1. A modular hitch device (122) for detachable connection to a powersports vehicle (100), comprising:
a hitch frame (280);
a hitch-vehicle coupling portion (282) connected to the hitch frame (280) and configured to detachably connect the modular hitch device (122) to the powersports vehicle (100);
a hitch-implement coupling portion (298) connected to the hitch frame (280) and configured to detachably connect the modular hitch device (122) to an implement (124);
an electrical interface configured to electrically connect the modular hitch device (122) to a power source; and
an electrical actuator mounted to the hitch frame (280) and in electrical connection with the electrical interface, the electrical actuator configured to convert electrical power received from the power source to mechanical movement of the modular hitch device (122).

2. The modular hitch device (122) of claim 1, wherein the hitch frame (280), hitch-vehicle coupling portion (282) and hitch-implement coupling portion (298) form at least one of a parallel-motion linkage and a fixed-pivoting linkage.

3. The modular hitch device (122) of claim 1 or claim 2, wherein the electrical actuator is connected to the hitch-vehicle coupling portion (282) and the hitch frame (280), and is configured to move the hitch frame (280) relative to the hitch-coupling portion (282).

4. The modular hitch device (122) of claim 1, 2 or 3, further comprising a battery, the battery being the power source, and being mounted to the modular hitch device (122).

5. The modular hitch device (122) of claim 1, further comprising a wireless transceiver configured to communicate with at least one of a controller of the powersports vehicle (100) or a remote computing device (183).

6. The modular hitch device (122) of any of claims 1-5, further comprising an implement device connectable to the modular hitch device (122), the implement device including:
a mechanical interface configured to connect to the hitch-implement coupling portion (298) of the modular hitch device (122); and
an electromechanical device for performing an operation of the implement device.

7. The modular hitch device (122) of claim 6, wherein the implement device is a mower, snow blower, bucket, rotary broom, brush mower, wood chipper, power grader, box scraper, post driver, soil conditioner, landscape rake, spreader, sprayer, power washer, auger, brush cutter, log splitter, vacuum collector, disc plow, tiller, trimmer mower, pallet forks, debris blower, cultivator, or planter.

8. The modular hitch device (122) of claim 7, wherein the implement device is a mower that includes a modular electric motor unit (405) with an electric motor (470) mounted to an adapter (417).

9. The modular hitch device (122) of claim 8, wherein the electric motor unit (405) includes an output shaft (435) with a coupling end (437), the adaptor having an annular shape with an annular flange portion secured to the electric motor, a plurality of circumferentially extending interface portions at a periphery of the adaptor, and a pair manual operated biased latch pins (419) supported by the adaptor and each having an extended position and a retracted position.

10. The modular hitch device (122) of claim 6, wherein the electromechanical device is a detachable motor in electrical connection with the electrical interface, the detachable motor configured to convert power received from the second power source to mechanical movement of at least a portion of the implement device.

11. The modular hitch device (122) of claim 9, wherein the second power source comprises at least one battery mounted to at least one of the modular hitch device (122) and the implement device.

12. A method of distributing electrical power in a powersports vehicle (100) having an attached modular vehicle hitch (122) and vehicle implement (124), comprising:
distributing first electrical power from the powersports vehicle (100) to the modular vehicle hitch (122);
receiving the first electrical power at the modular hitch device (122) and modifying the first electrical power for use by an actuator of the modular vehicle hitch (122);
distributing the modified first electrical power to the actuator of the modular vehicle hitch (122); and
distributing second electrical power from the powersports vehicle (100) to the vehicle implement (124) connected to the modular vehicle hitch for powering an electromechanical device of the vehicle implement.

13. The method of claim 12, wherein distributing first electrical power from the powersports vehicle (100) to the modular vehicle hitch (122) comprises distributing direct-current (DC) power from a traction-motor battery of the powersports vehicle (100) to the vehicle hitch through a wiring harness and connector system.

14. The method of claim 12 or 13, wherein receiving the first electrical power at the hitch device (122) and modifying the first electrical power for use by an actuator of the modular vehicle hitch (122) comprises receiving the first electrical power at a voltage converter and reducing the voltage of the first electrical power for use by the actuator of the modular vehicle hitch (122).

15. The method of any of claims 12-14, wherein the electromechanical device of the vehicle implement (124) comprises a detachable motor unit.
